(19) Europäisches Patentamt
European Patent Office
Office européen des brevets

(11) EP 4 397 484 A1

(12) **EUROPEAN PATENT APPLICATION**
published in accordance with Art. 153(4) EPC

(43) Date of publication:
**10.07.2024 Bulletin 2024/28**

(21) Application number: **22864579.2**

(22) Date of filing: **30.08.2022**

(51) International Patent Classification (IPC):
***B32B 27/00*** *(2006.01)* ***B65D 65/40*** *(2006.01)*
***C09D 5/00*** *(2006.01)* ***C09D 5/20*** *(2006.01)*
***C09D 175/04*** *(2006.01)*

(52) Cooperative Patent Classification (CPC):
**B32B 27/00; B65D 65/40; C09D 5/00; C09D 5/20; C09D 175/04;** Y02W 30/62

(86) International application number:
**PCT/JP2022/032646**

(87) International publication number:
**WO 2023/032997 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2021 JP 2021142898**

(71) Applicants:
- **artience Co., Ltd.**
  **Tokyo 104-8377 (JP)**
- **Toyo Ink Co., Ltd.**
  **Tokyo 104-8378 (JP)**
- **Toyo-Morton, Ltd.**
  **Chuo-ku**
  **Tokyo 1040031 (JP)**
- **Toyochem Co., Ltd.**
  **Chuo-ku**
  **Tokyo 1048379 (JP)**

(72) Inventors:
- **YAMAGAMI, Tomoe**
  **Tokyo 104-8378 (JP)**
- **SHIKIJI, Wataru**
  **Tokyo 104-8378 (JP)**
- **KONDO, Soichiro**
  **Tokyo 104-8378 (JP)**

(74) Representative: **Becker, Eberhard**
**Becker Kurig & Partner**
**Patentanwälte mbB**
**Bavariastraße 7**
**80336 München (DE)**

(54) **PACKAGING MATERIAL, RECYCLED MOLDING MATERIAL, AND METHODS FOR MANUFACTURING SAME**

(57) One embodiment of the present invention pertains to a packaging material provided with at least a first base material, a primer layer (S), and a printing layer (R) in the stated order, or a packaging material provided with at least the first base material and the printing layer (T) in the stated order. The primer layer (S) and the printing layer (T) are each a layer that is for recycling the first base material by causing the first base material to be separated therefrom and that contains a compound having an acidic group. The printing layer (R) and the printing layer (T) are each a layer that contains a colorant, a dispersant (A), and a binder resin.

EP 4 397 484 A1

## Description

[Technical Field]

The present invention pertains to a packaging material suitable in terms of the recyclability of a plastic base material, a molding material recycled from the packaging material, and methods for manufacturing the same.

[Background Art]

In recent years, packages, plastic bottles and other plastic products for which a plastic film is used as a raw material have been discarded and dumped into the ocean as garbage and have become an environmental issue. These plastic products are decomposed in sea water, turn into submicron-sized debris (microplastics) and float in sea water. There is a concern that the microplastics may be ingested into marine life such as fish and thereby concentrated in biological bodies and may also affect the health of seabirds or human beings that ingest the marine life as food.

Examples of the plastic products include plastic bottles, caps, bags of a single-layer film called plastic bags, food-packaging packages having a multilayer configuration for which a plastic film is used and the like. Plastic bottles, caps, and bags of a single-layer film are mono-material plastic products mainly containing one resin as a raw material and are relatively easy to recycle. Particularly, for bottles of a polyester base material (PET) or food trays of polystyrene (PS), recovery systems have been built in administrations or retail stores such as supermarkets, and bottle-to-bottle or tray-to-tray has been realized.

On the other hand, in the case of food-packaging packages having a multilayer configuration, a variety of plastic base materials such as a polyester base material, a nylon base material (NY), a polypropylene base material (PP) and a polyethylene base material (PE) are used as film base materials. Printing is performed on these film base materials with printing ink, and the film base materials are pasted to thermally-melted resin base materials with an adhesive or the like, then, cut and thermally fused to become packages. However, such food-packaging packages having a multilayer configuration contain a plurality of dissimilar materials that is not compatible with each other in a mixture form and thus have a problem in that material recycling is not possible.

In addition, regarding the plastic base materials, attempts have been made to configure packages only with a polyolefin base material such as polypropylene and recycle the base material. However, packages including a polyolefin base material alone are not sufficient in terms of retort resistance, light-blocking properties or the like, which makes the packages not suitable for usage forms where such high functions are required. Furthermore, for example, even when a package has been recycled, there is a problem in that only plastic raw materials having a dark color such as black or gray can be obtained due to a printing layer or an adhesive layer that is included in the package. For polyolefin base materials such as PP, it is difficult to take out the polyolefin base materials as transparent resins once the polyolefin base materials are colored, and thus there is a demand in the market for the material recycling of polyolefin base materials that are not colored.

Furthermore, a recycled polyolefin resin recycled in a state of including such a printing layer or adhesive layer deteriorates in terms of the physical properties due to a resin component derived from the printing layer or the adhesive layer and needs to be used after being mixed with a petroleum-derived virgin resin. Therefore, it is difficult to improve the recycling rate.

Regarding the removal of a printing layer from such a plastic base material, Patent Literature 1 discloses a technique in which an undercoat layer composed of an acrylic resin or a styrene maleic acid-based resin is provided on a plastic base material and a surface-printed printing layer disposed on the undercoat layer is removed with alkali water. In addition, Patent Literature 2 discloses a technique in which an ink containing a polyurethane resin or acrylic resin having an acidic group as a binder resin is printed by surface printing and, similarly, the printing layer is removed with alkali water.

However, these are techniques only for removing surface-printing ink on the outside of a package and are not intended to remove a printing layer in a laminate and peel base materials from each other. From food-packaging packages having a multilayer configuration in which base materials cannot be peeled from each other, only any of (1) a plastic raw material having poor mechanical properties or (2) a plastic raw material having a dark color can be recycled, and such food-packaging packages cannot be used in material recycling.

Incidentally, Patent Literature 3 discloses a technique for separating a printing layer from a laminate having a surface-printing configuration or a laminate configuration using a separation layer containing a polyurethane resin having a predetermined acid value.

However, in order to use a resin recycled from such a laminate configuration as a molding material in a variety of fields, additional separability is required.

[Citation List]

[Patent Literature]

[Patent Literature 1]
Japanese Patent Laid-Open No. 2001-131484
[Patent Literature 2]
Japanese Patent Laid-Open No. 11-209677
[Patent Literature 3]
Japanese Patent Laid-Open No. 2020-090627

[Summary of Invention]

[Technical Problem]

An objective of the present invention is to provide a packaging material and a packaging container suitable for plastic recycling in which not only a printing layer on the outside of a package but also a printing layer on the inside can be removed, the separability of a printed base material is excellent, furthermore, coloration of the separated base material due to re-adhesion of the separated printing layers is suppressed, and, additionally, the dispersion stability of a printing ink is favorable. Furthermore, another objective is to provide a high-quality molding material by recycling a recovered base material.

[Solution to Problem]

The present invention pertains to a packaging material provided with at least a first base material, a primer layer (S), and a printing layer (R) in the stated order, or a packaging material provided with at least a first base material and a printing layer (T) in the stated order,

in which the primer layer (S) and the printing layer (T) are each a layer that is for recycling the first base material by causing the first base material to be separated therefrom and that contains a compound having an acidic group, and the printing layer (R) and the printing layer (T) are each a layer that contains a colorant, a dispersant (A), and a binder resin.

In addition, the present invention pertains to a packaging material provided with at least a first base material, a primer layer (S), a printing layer (R), and a second base material in the stated order, or a packaging material provided with at least a first base material, a printing layer (T), and a second base material in the stated order,

in which the primer layer (S) and the printing layer (T) are each a layer that is for recycling the first base material by causing the first base material to be separated therefrom and that contains a compound having an acidic group, and the printing layer (R) and the printing layer (T) are each a layer that contains a colorant, a dispersant (A), and a binder resin.

In addition, the present invention pertains to the packaging material, in which the dispersant (A) is a pigment derivative and/or a resin-type dispersant.
In addition, the present invention pertains to the packaging material, in which the dispersant (A) contains a pigment derivative and a resin-type dispersant.
In addition, the present invention pertains to the packaging material, in which a content of the pigment derivative is 0.01 to 10 mass% of the entire colorant.
In addition, the present invention pertains to the packaging material, in which the compound having an acidic group is a binder resin.
In addition, the present invention pertains to the packaging material, in which the compound having an acidic group has an acid value of 15 to 300 mgKOH/g.
In addition, the present invention pertains to the packaging material, in which the compound having an acidic group is a polyurethane resin.
In addition, the present invention pertains to the packaging material, in which the primer layer (S) contains a polyurethane resin having an acid value of 15 to 70, and the printing layer (R) contains 0.01 to 5 mass% of a pigment

derivative with respect to the entire colorant.

In addition, the present invention pertains to a recycled molding material including a first base material obtained by bringing the packaging material into contact with an alkali aqueous solution and separating the packaging material.

In addition, the present invention pertains to a method for manufacturing a recycled molding material including a first base material obtained by separating the packaging material, the method including the following steps 1 to 3.

(Step 1) A step of crushing the packaging material according to any one of Claims 1 to 8 and bringing the packaging material into contact with an alkali aqueous solution to separate the first base material from the packaging material
(Step 2) A step of washing the first base material obtained in the step 1 with water
(Step 3) A step of heat-molding the first base material obtained in the step 2

[Advantageous Effects of Invention]

The present invention makes it possible to provide a packaging material and a packaging container suitable for plastic recycling in which not only a printing layer on the outside of a package but also a printing layer on the inside can be removed, the separability of a printed base material is excellent, furthermore, coloration of the separated base material due to re-adhesion of the separated printing layers is suppressed, and, additionally, the dispersion stability of a printing ink is favorable. Furthermore, the present invention makes it possible to provide a high-quality molding material by recycling a recovered base material.

[Description of Embodiments]

Hereinafter, an embodiment of the present invention will be described in detail, but the description of the embodiment or requirements to be described below is simply examples of the embodiment of the present invention, and the present invention is not limited to the contents thereof within the scope of the gist of the present invention.

A packaging material of the present invention is a packaging material provided with at least a first base material, a primer layer (S), and a printing layer (R) or at least a first base material and a printing layer (T) in the stated order, in which the primer layer (S) and the printing layer (T) are each a layer for recycling the first base material by causing the first base material to be separated therefrom, the primer layer (S) and the printing layer (T) are each a layer containing a compound having an acidic group, and the printing layer (R) and the printing layer (T) each contain a colorant, a dispersant (A), and a binder resin.

In addition, a packaging material of the present invention is a packaging material provided with at least a first base material, a primer layer (S), a printing layer (R), and a second base material or at least a first base material, a printing layer (T), and a second base material in the stated order, in which the primer layer (S) and the printing layer (T) are each a layer for recycling the first base material by causing the first base material to be separated therefrom, the primer layer (S) and the printing layer (T) are each a layer containing a compound having an acidic group, and the printing layer (R) and the printing layer (T) each contain a colorant, a dispersant (A), and a binder resin.

In the packaging material, the primer layer (S) and the printing layer (T) each contain an acidic compound and are thereby dissolved and peeled off by a basic aqueous solution, the first base material is separated, and the first base material can be taken apart and recovered. Therefore, the packaging material of the present invention corresponds to a packaging material that is used to take apart and recover the first base material. In addition, in the packaging material, the printing layer (R) and the printing layer (T) each contain a dispersant (A), whereby not only does the dispersion stability of printing ink become favorable but the separability of the first base material also improves. Furthermore, the content of the dispersant (A) is made to be appropriate, whereby re-adhesion of a printing layer component to the separated base material is suppressed, and it becomes possible to recover and recycle a base material in which coloration is less likely as a high-quality molding material.

Hereinafter, the present invention will be described in detail, but these are simply examples of an embodiment of the present invention, and the present invention is not limited to these contents within the scope of the gist.

<Layer for separating first base material and recycling first base material>

In the packaging material of the present invention, a layer in contact with the first base material needs to be a layer containing a compound having an acidic group in order to recycle the first base material. Specifically, the layer needs to be at least any of the primer layer (S) and the printing layer (T).

<Primer layer (S)>

The primer layer (S) in the present invention is a layer that is disposed in a form of being in contact with the

first base material and is for separating the first base material by dissolution, peeling or the like using a basic aqueous solution and contains a compound having an acidic group. The primer layer (S) is formed from a primer composition to be described below.

<Compound having acidic group>

The compound having an acidic group may be a resin or a low-molecular-weight compound and can be selected from well-known conventional compounds having an acidic group. The compound may be used singly or two or more compounds may be jointly used.

Examples of a resin having an acidic group include

resins having an acid value such as a rosin-modified maleic acid resin, a rosin-modified fumaric acid resin and an acid-modified polyolefin resin;
resins that are radical copolymers such as a (meth)acrylic resin, a styrene-(meth)acrylic resin, a styrene-(anhydrous) maleic acid resin and a terpene-(anhydrous) maleic acid resin obtained by homopolymerizing or copolymerizing a polymerizable monomer having an acidic group such as a polymerizable monomer having a carboxyl group such as acrylic acid, methacrylic acid, itaconic acid, maleic acid, fumaric acid, cinnamic acid or an acid anhydride thereof, a polymerizable monomer having a sulfonic acid group such as sulfonated styrene or a polymerizable monomer having a sulfonamide group such as vinylbenzenesulfonamide; and
one of these can be used singly or a plurality thereof can be used in a mixture form.

In addition, as the primer layer, it is also possible to use a layer obtained by mixing one or a plurality of low-molecular-weight compounds having an acidic group with a resin having a film-forming property at normal temperature.

Examples of the low-molecular-weight compound having an acidic group include saturated fatty acids, unsaturated fatty acids, hydroxy acids, aromatic carboxylic acids, dicarboxylic acids, tricarboxylic acids, oxocarboxylic acids, carboxylic acid derivatives, acid anhydrides and the like, and one of these can be used singly or a plurality thereof can be used in a mixture form.

Examples of the saturated fatty acids include lauric acid, myristic acid, palmitic acid, margaric acid, stearic acid and the like,

examples of the unsaturated fatty acids include oleic acid, linoleic acid, linolenic acid, arachidonic acid, eicosapentaenoic acid, docosahexaenoic acid, sorbic acid and the like,
examples of the hydroxy acids include lactic acid, malic acid, citric acid and the like,
examples of the aromatic carboxylic acids include benzoic acid, phthalic acid, isophthalic acid, terephthalic acid, salicylic acid, gallic acid, mellitic acid, cinnamic acid and the like,
examples of the dicarboxylic acids include oxalic acid, malonic acid, succinic acid, glutaric acid, adipic acid, fumaric acid, maleic acid and the like,
examples of the tricarboxylic acids include aconitic acid,
examples of the oxocarboxylic acids include pyruvic acid, oxaloacetic acid and the like,
examples of the carboxylic acid derivatives include amino acids, nitrocarboxylic acids and the like, and
examples of the acid anhydrides include trimellitic anhydride, pyromellitic anhydride and the like.

One of these can be used singly or a plurality thereof can be used in a mixture form.

The compound having an acidic group is preferably a binder resin. The acid value of the binder resin is preferably 5 mgKOH/g or higher, more preferably 15 to 400 mgKHO/g and still more preferably 20 to 300 mgKOH/g. When the acid value is 5 mgKOH/g or higher, the separability by a basic aqueous solution becomes favorable, which is preferable, and, when the acid value is 400 mgKOH/g or lower, the base material adhesiveness or the retort resistance becomes favorable, which is preferable. In addition, the compound having an acidic group preferably contains a resin having an ester structure that is likely to dissolve in basic aqueous solutions. Alternatively, the compound having an acidic group preferably contains a resin that is likely to swell in basic aqueous solutions.

In addition, the hydroxyl value of the binder resin is preferably 1 to 250 mgKOH/g and more preferably 10 to 45 mgKHO/g. When the hydroxyl value is 1 mgKOH/g or higher, the separability by a basic aqueous solution becomes favorable, which is preferable, and, when the hydroxyl value is 250 mgKOH/g or lower, the base material adhesiveness becomes favorable, which is preferable.

In the present invention, acid values and hydroxyl values are all values measured according to JIS K 0070.

The content of the binder resin is preferably 60 mass% or more and more preferably 80 mass% or more of the total amount of the resin components that configure the primer layer.

Examples of a resin skeleton of the binder resin include a urethane resin, an acrylic resin, a cellulose resin, a

polyamide resin, a vinyl chloride resin such as a vinyl chloride-vinyl acetate copolymer resin or a vinyl chloride-acrylic copolymer resin, a rosin-based resin, an ethylene-vinyl acetate copolymer resin, a vinyl acetate resin, a styrene resin, a dammar resin, a styrene-maleic aid copolymer resin, a styrene-acrylic copolymer resin, a polyester resin, an alkyd resin, a terpene resin, a phenol-modified terpene resin, a ketone resin, cyclized rubber, chlorinated rubber, butyral, a polyacetal resin, a petroleum resin, an amino resin, polylactic acid and modified resins thereof.

These resins may be used singly or two or more thereof may be used in a mixture form.

Among these, the primer layer preferably contains at least one resin selected from the group consisting of a urethane resin, an acrylic resin, a polyester resin, a rosin resin and a styrene-maleic aid copolymer resin and more preferably contains a urethane resin since appropriate lamination is favorable.

[Urethane resin]

The acid value of the urethane resin is preferably 15 mgKOH/g or higher, more preferably 15 to 70 mgKHO/g and still more preferably 20 to 50 mgKOH/g. When the acid value is 15 mgKOH/g or higher, the separability by a basic aqueous solution becomes favorable, which is preferable, and, when the acid value is 70 mgKOH/g or lower, the base material adhesiveness or the retort resistance becomes favorable, which is preferable.

In addition, the hydroxyl value of the urethane resin is preferably 1 to 35 mgKOH/g and more preferably 10 to 30 mgKHO/g. When the hydroxyl value is 1 mgKOH/g or higher, the separability by a basic aqueous solution becomes favorable, which is preferable, and, when the hydroxyl value is 35 mgKOH/g or lower, the base material adhesiveness becomes favorable, which is preferable.

The weight-average molecular weight of the urethane resin is preferably 10,000 to 100,000, more preferably 15,000 to 70,000 and still more preferably 15,000 to 50,000.

The molecular weight distribution (Mw/Mn) of the urethane resin is preferably 6 or less. Mw indicates the weight-average molecular weight, and Mn indicates the number-average molecular weight. In a case where the molecular weight distribution is 6 or less, it is possible to avoid an influence attributed to an excessively high-molecular-weight component, an unreacted component, a side reaction component and other low-molecular-weight components, and the separability and the drying property and retort resistance of the primer composition become favorable.

In addition, as the molecular weight distribution becomes smaller, that is, the molecular weight distribution becomes sharper, the dissolution/peeling action by the separation liquid occurs more uniformly, and the separability of the first base material further improves, which is preferable. The molecular weight distribution is more preferably 5 or less and still more preferably 4 or less. In addition, the molecular weight distribution is preferably 1.5 or more and more preferably 1.2 or more.

Mw, Mn and the molecular weight distribution (Mw/Mn) are polystyrene-equivalent values obtained by gel permeation chromatography (GPC).

When the molecular weight distribution and the acid value are within the above-described ranges, not only the separability by the basic aqueous solution but the drying property, base material adhesiveness and retort resistance of the primer composition become favorable, which is preferable.

The urethane resin may have an amine value. In a case where the urethane resin has an amine value, the amine value is preferably 0.1 to 20 mgKOH/g and more preferably 1 to 10 mgKOH/g. When the amine value is within the above-described range, the base material adhesiveness is excellent.

The urethane resin is not particularly limited and is preferably, for example, a resin obtained by reacting a polyol, a hydroxy acid and a polyisocyanate. The use of a hydroxy acid makes it possible to impart an acid value to the urethane resin and makes it possible to improve the separability. The urethane resin is more preferably a resin obtained by further reacting a polyamine with the resin obtained by reacting a polyol, a hydroxy acid and a polyisocyanate.

(Polyol)

Polyols are a generic term of compounds having at least two hydroxyl groups in one molecule and do not contain a hydroxy acid to be described below.

The number-average molecular weight of the polyol is preferably 500 to 10,000 and more preferably 1,000 to 5,000. The number-average molecular weight mentioned herein is a weight that is calculated from the hydroxyl value of the polyol, and the hydroxyl value refers to a measurement value by JIS K 0070. When the number-average molecular weight of the polyol is 500 or more, the flexibility of the primer layer is excellent, and adhesiveness to the first base material improves. When the number-average molecular weight is 10,000 or less, blocking resistance to the first base material is excellent.

The polyol is not particularly limited, and, at least one polyol selected from the group consisting of a polyester polyol, a polyether polyol and a polycarbonate polyol is more preferably used. Furthermore, the polyol may further contain a dimer diol, a hydrogenated dimer diol, a castor oil-modified polyol or the like.

That is, the urethane resin in the present invention preferably contains at least one polyol-derived configuration unit selected from the group consisting of a polyester polyol, a polyether polyol and a polycarbonate polyol. Since the alkali hydrolysis of an ester bond part of a polyester polyol improves the separability, the urethane resin more preferably contains a polyester polyol-derived configuration unit.

The content of the polyol-derived configuration unit is preferably 10 to 75 mass%, more preferably 15 to 70 mass% and still more preferably 20 to 65 mass% of the total amount of the urethane resin. The content rate of the polyester polyol-derived configuration unit is preferably 5 mass% or more, more preferably 30 mass% or more, still more preferably 60 mass% or more and particularly preferably 80 mass% or more of the total amount of the polyol-derived configuration unit.

[Polyester polyol]

Examples of the polyester polyol include polyester polyols composed of a condensate of a dibasic acid and a diol; and polyester polyols composed of a polylactone polyol, which is a ring-opening polymer of a cyclic ester compound, and a polyester diol is preferable. The polyester polyol can be used singly or two or more polyester polyols can be used in a mixture form.

Examples of the dibasic acid include adipic acid, a phthalic anhydride, isophthalic acid, terephthalic acid, maleic acid, fumaric acid, succinic acid, oxalic acid, malonic acid, pimelic acid, azelaic acid, sebacic acid, suberic acid, glutaric acid, 1,4-cyclohexyldicarboxylic acid, dimer acid, hydrogenated dimer acid and the like, and, among these, adipic acid or succinic acid is preferable.

Examples of the diol include ethylene glycol, diethylene glycol, triethylene glycol, 1,2-propanediol (hereinafter, propylene glycol), 1,3-propanediol, 1,4-butanediol, 1,3-butanediol, 1,6-hexanediol, 1,8-octanediol, 1,9-nonanediol, neopentyl glycol, 3-methyl-1,5-pentanediol, 2-methyl-1,3-propanediol, 3,3,5-trimethylpentanediol, 2,4-diethyl-1,5-pentanediol, 1,12-octadecanediol, 1,2-alkanediol, 1,3-alkanediol, 1-monoglyceride, 2-monoglyceride, 1-monoglycerin ether, 2-monoglycerin ether, dimer diol, hydrogenated dimer diol and the like.

As the polyester diol, a condensate of a dibasic acid and a diol having a branched structure may be used. The use of the diol having a branched structure makes it possible to improve the adhesiveness to plastic base materials or the retort resistance, which is preferable.

The diol having a branched structure is preferably a diol having a structure in which at least one hydrogen atom in alkylene glycol has been substituted with an alkyl group, and examples thereof include 1,2-propanediol, 1,3-butanediol, 2-methyl-1,3-propanediol, neopentyl glycol, 1,4-pentanediol, 3-methyl-1,5-pentanediol, 2,5-hexanediol, 2-methyl-1,4-pentanediol, 2,4-diethyl-1,5-pentanediol, 2-butyl-2-ethyl-1,3-propanediol, 2-methyl-1,8-octanediol, 2,2,4-trimethyl-1,3-pentanediol and 2,2,4-trimethyl-1,6-hexanediol. Among these, at least one selected from the group consisting of 1,2-propanediol, 3-methyl-1,5-pentanediol, neopentyl glycol and 2-butyl-2-ethyl-1,3-propanediol is preferable, and 1,2-propanediol or 3-methyl-1,5-pentanediol is preferably used.

As a raw material of the polyester polyol, a polyol having 3 or more hydroxyl groups and a polyvalent carboxylic acid having 3 or more carboxyl groups may be jointly used.

Examples of the cyclic ester compound preferably include $\alpha$-acetolactone, $\beta$-propiolactone, $\gamma$-butyrolactone, $\delta$-valerolactone, $\varepsilon$-caprolactone and the like.

Furthermore, as the polyester polyol, a polyester polyol having a structural unit represented by the following general formula (1) is preferable.

General Formula (1)

[Chem. 1]

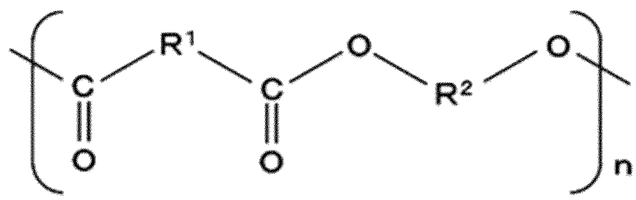

In the general formula (1), $R^1$ and $R^2$ are each independently a substituted or unsubstituted alkylene group having 1 to 10 carbon atoms and may be the same as or different from each other. n is a natural number.

The numbers of linear carbon atoms in the alkylene groups as $R^1$ and $R^2$ are each preferably 1 to 6 and more

preferably 1 to 3.

The number of linear carbon atoms in the alkylene group mentioned herein refers to the number of carbon atoms not including carbon atoms that are included in the branched structure or the substituent, for example, the number of linear carbon atoms is 5 in the case of 3-methyl-1.5-pentanediol, and the number of linear carbon atoms is 3 in the case of 2-butyl-2-ethyle-1,3-propanediol.

The polyester polyol having the structural unit represented by the general formula (1) can be obtained by, for example, the copolymerization of a dibasic acid such as adipic acid, succinic acid or sebacic acid and a diol such as 1,2-propanediol (propylene glycol), 1,3-butanediol, 2-methyl-1,3-propanediol or 3-methyl-1,5-pentanediol.

[Polyether polyol]

Examples of the polyether polyol include polymers or copolymers such as methylene oxide, propylene oxide and tetrahydrofuran, specifically, polyethylene glycol, polypropylene glycol, polytrimethylene glycol, polytetramethylene glycol or a copolymer thereof is preferably contained, and polyethylene glycol, polypropylene glycol or polytetramethylene glycol is more preferably contained. These can be used singly or two or more thereof can be used in a mixture form.

[Polycarbonate polyol]

As the polycarbonate polyol, an aliphatic polycarbonate polyol is preferably contained. The number-average molecular weight of the polycarbonate polyol is preferably 500 to 5,000, more preferably 800 to 4,000 and still more preferably 1,000 to 3,000.

The aliphatic polycarbonate polyol preferably includes an aliphatic diol-derived configuration unit such as a substituted or unsubstituted alkylene alcohol and is preferably a polycondensate obtained by an ester exchange reaction between an aliphatic diol and a carbonate compound while there is no limitation on the manufacturing method thereof.

The aliphatic diol preferably has 4 to 10 carbon atoms, and examples thereof include ethylene glycol, 1,2-propanediol, 1,3-propanediol, 1,4-butanediol, 1,5-pentanediol, 2-methyl-1,3-propanediol, neopentyl glycol, 3-methyl-1,5-pentanediol, 1,6-hexanediol, 1,8-octanediol, 1,9-nonanediol, 2-methyl-1,8-octanediol, 1,10-decanediol, 2-butyl-2-ethyl-1,3-propanediol, 1,4-butynediol, 2,2,4-trimethyl-1,3-pentanediol, 1,4-cyclohexanedimethanol, diethylene glycol, polypropylene glycol, dipropylene glycol and the like. A substituent in the aliphatic diol is preferably an alkyl group having 10 carbon atoms. These aliphatic diols can be used singly or two or more thereof can be used in a mixture form.

The carbonate compound is not particularly limited, and examples thereof include dialkyl carbonates such as dimethyl carbonate, diethyl carbonate and dibutyl carbonate; diaryl carbonates such as diphenyl carbonate; and alkylene carbonates such as ethylene carbonate. Since the carbonate compound turns into a polycondensate by an ester exchange reaction with the aliphatic diol and is substituted, the structure of the carbonate compound is not limited, and a carbonate compound having favorable reactivity may be selected as appropriate.

The polycarbonate polyol is preferably a liquid at 25°C. The use of a liquid polycarbonate polyol as a raw material of the polyurethane resin imparts flexibility and elasticity to the primer layer, improves the adhesiveness to base materials and improves the retort suitability and the blocking resistance.

Examples of such a liquid polycarbonate polyol preferably include aliphatic polycarbonate diols for which an alkylene glycol having an odd number of carbon atoms and a linear structure and an alkylene glycol having an even number of carbon atoms and a linear structure (linear diol) are used as aliphatic diol components, aliphatic polycarbonate polyols for which an alkylene glycol having an alkyl substituent (branched diol) is used and the like.

When the aliphatic polycarbonate polyol contains a structural unit derived from a branched diol having tertiary carbon as an aliphatic diol component, the separability and the blocking resistance become favorable, which is preferable.

Examples of the branched diol having tertiary carbon include 1,2-propanediol, 2-methyl-1,3-propanediol, 3-methyl-1,5-pentanediol, 2-methyl-1,8-octanediol and 2,2,4-trimethyl-1, 3-pentanediol, and 3-methyl-1,5-pentanediol is preferable.

The aliphatic polycarbonate polyol is more preferably an aliphatic polycarbonate polydiol for which a linear diol and a branched diol having tertiary carbon are jointly used, and an aliphatic polycarbonate polyol for which 1,6-hexanediol and 3-methyl-1,5-pentanediol are used is particularly preferable.

The mass ratio (linear diokbranched diol having tertiary carbon) in the total mass of the aliphatic polycarbonate polyol is preferably 70:30 to 5:95 and more preferably 50:50 to 10:90.

(Hydroxy acid)

The hydroxy acid in the present invention refers to a compound having both a hydroxyl group, which is an active hydrogen group, and an acidic functional group in one molecule.

The acidic functional group refers to a functional group that can be neutralized with potassium hydroxide at the

time of measuring the acid value, specific examples thereof include a carboxyl group, a sulfonic acid group and the like, and a carboxyl group is preferable. The probability of the acidic group reacting with an isocyanate group is low and is thus capable of holding the acid value even in a case where a hydroxyl group-containing urethane resin is used.

The hydroxy acid is not particularly limited, and, for example, dimethylolalkanoic acids such as 2,2-dimethylolpropionic acid, 2,2-dimethylolbutanoic acid and 2,2-dimethylolvaleric acid are preferably used. These can be used singly or two or more thereof can be used in a mixture form.

(Polyisocyanate)

The polyisocyanate is not particularly limited and can be selected from well-known conventional polyisocyanates. A diisocyanate or a triisocyanate is preferably contained, and an aromatic, aliphatic or alicyclic diisocyanate is more preferably contained. These may be used singly or two or more thereof may be jointly used.

Examples of the aromatic, aliphatic or alicyclic diisocyanate include aromatic diisocyanates such as 1,5-naphthylene diisocyanate, 4,4'-diphenylmethane diisocyanate, 4,4'-diphenyldimethylmethane diisocyanate, 4,4'-dibenzylisocyanate, dimethyldiphenylmethane diisocyanate, tetramethyldiphenylmethane diisocyanate, 1,3-phenylene diisocyanate, 1,4-phenylene diisocyanate, m-xylylene diisocyanate, p-xylylene diisocyanate, o-xylylene diisocyanate, 2,4-tolylene diisocyanate and 2,6-tolylene diisocyanate; aliphatic diisocyanates such as tetramethylene diisocyanate, hexamethylene diisocyanate, isopropylene diisocyanate, methylene diisocyanate, 2,2,4-trimethylhexamethylene diisocyanate and 2,4,4-trimethylhexamethylene diisocyanate; cycloaliphatic diisocyanates such as cyclohexane-1,4-diisocyanate, hydrogenated xylylene diisocyanate, isophorone diisocyanate, lysine diisocyanate, dicyclohexylmethane-4,4'-diisocyanate, 1,3-bis(isocyanatomethyl)cyclohexane, methylcyclohexane diisocyanate, m-tetramethylxylylene diisocyanate and dimer diisocyanates in which a carboxyl group of dimer acid is converted into an isocyanate group; and the like.

Among these, at least one selected from the group consisting of isophorone diisocyanate, 4,4'-diphenylmethane diisocyanate, xylylene diisocyanate, hydrogenated xylylene diisocyanate, tolylene diisocyanate, hexamethylene diisocyanate and dicyclohexylmethane-4,4'-diisocyanate is preferable from the viewpoint of the reactivity. The diisocyanate is also preferably a triisocyanate having a trimer structure such as an isocyanurate structure.

(Polyamine)

A polyamine in the present invention is not particularly limited and is preferably a diamine compound.

Examples of the diamine compound include ethylene diamine, propylene diamine, hexamethylene diamine, isophorone diamine, dicyclohexylmethane-4,4'-diamine and, furthermore, dimer diamines in which a carboxyl group of dimer acid is converted into an amino group. These can be used singly or two or more thereof can be used in a mixture form.

Diamines having a hydroxyl group such as 2-hydroxyethylethylenediamine, 2-hydroxyethylpropylenediamine, di-2-hydroxyethylethylenediamine, di-2-hydroxyethylpropylenediamine, 2-hydroxypropylethylenediamine and di-2-hydroxypropylethylenediamine are more preferable. The use of the diamine having a hydroxyl group makes it possible to leave a certain amount of the hydroxyl group unreacted and makes it possible to introduce a hydroxyl value into the urethane resin.

As the diamine compound, amino acid can be used. The amino acid refers to a compound having both an amino group and an acidic functional group in one molecule, and examples thereof include glutamine, asparagine, lysine, diaminopropionic acid, ornithine, diaminobenzoic acid and diaminobenzenesulfonic acid. The acidic group has a low probability of reacting with an isocyanate group and is thus capable of holding the acid value in the polyurethane resin.

A polymerization terminator may be jointly used at the time of reacting the polyamine. Examples of the polymerization terminator include dialkylamine compounds such as di-n-dibutylamine; amine compounds having a hydroxyl group such as monoethanolamine, diethanolamine, butanolamine, 2-amino-2-methyl-1-propanol, tri(hydroxymethyl)aminomethane, 2-amino-2-ethyl-1,3-propanediol, N-di-2-hydroxyethylethylenediamine, N-di-2-hydroxyethylpropylenediamine and N-di-2-hydroxypropylethylenediamine; and monoamine-type amino acid compounds such as glycine, alanine, glutamic acid, taurine, aspartic acid, aminobutyric acid, valine, aminocaproic acid, aminobenzoic acid, aminoisophthalic acid and sulfamic acid. An amine compound having a hydroxyl group is preferably used to introduce the hydroxyl value into the polyurethane resin.

[Manufacture of urethane resin]

As described above, the urethane resin is more preferably a resin having a chain extended by further reacting a polyamine with a urethane prepolymer having an isocyanate group at an end obtained by reacting a polyol, hydroxy acid and a polyisocyanate. In this case, in the reaction among the polyol, the hydroxy acid and the polyisocyanate (hereinafter, referred to as the urethane-forming step), the functional group mole ratio (NCO/OH) of the polyisocyanate to the polyol and the hydroxy acid is preferably 1.05 to 3.0 and more preferably 1.1 to 2.8. In addition, the functional

group mole ratio (amino group/NCO) between the isocyanate group in the urethane prepolymer and the amino group in the polyamine is preferably 0.7 to 1.3.

The number of urethane bonds in the polyurethane resin is preferably 1 to 3 mmol/g and more preferably 1.5 to 2 mmol/g. The number of urea bonds in the hydroxyl group-containing polyurethane resin is preferably 0 to 3 mmol/g and more preferably 0.2 to 1 mmol/g. In addition, the total of the number of urethane bonds and the number of urea bonds is preferably 1 to 6 mmol/g and more preferably 1.7 to 3 mmol/g.

When the number of urethane bonds and the number of urea bonds are set within the above-described ranges, the separation and the base material adhesiveness become favorable, which is preferable.

The number of urethane bonds is a value that is represented by the following formula (3) in the case of (NCO mol number/OH mole number) > 1 in the urethane-forming step and is a value that is represented by the following formula (4) in the case of (NCO mol number/OH mole number) ≤ 1.

Number of urethane bonds (mmol/g) = total mole number of hydroxyl groups (mmol)/total mass of solid content (g) Formula (3):

Number of urethane bonds (mmol/g) = total mole number of isocyanate groups (mmol)/total mass of solid content (g) Formula (4):

In the formulae (3) and (4), the total mole number of hydroxyl groups represents the total mole number of hydroxyl groups in the polyol, the hydroxy acid and the like that are used in the urethane-forming step, the total mass of the solid content represents the total mass of a non-volatile component of the polyurethane resin, and the total mole number of isocyanate groups represents the total mole number of isocyanate groups in the polyisocyanate.

The number of urea bonds is a value that is applied to a substance that has been subjected to a urethane-forming reaction under a condition of (NCO mol number/OH mole number) > 1.

The number of urea bonds is a value that is represented by the following formula (5) in the case of (amino group mol number/NCO mole number) > 1 in the urethane-forming step and is a value that is represented by the following formula (6) in the case of (amino group mol number/NCO mole number) < 1.

Number of urea bonds (mmol/g) = [total mole number of isocyanate groups (mmol) - total mole number of hydroxyl groups (mmol)]/total mass of solid content (g) Formula (5):

Number of urea bonds (mmol/g) = total mole number of amino groups (mmol)/total mass of solid content (g) Formula (6):

In the formulae (5) and (6), the total mole number of isocyanate groups represents the total mole number of isocyanate groups in the polyisocyanate that is used in the urethane-forming step, the total mole number of hydroxyl groups represents the total mole number of hydroxyl groups in the polyol, the hydroxy acid and the like that are used in the urethane-forming step, the total mole number of amino groups represents the total mole number of primary and/or secondary amino groups in the polyamine that are used in the urethane-forming step, and the total mass of the solid content represents the total mass of the non-volatile component of the polyurethane resin.

[Acrylic resin]

The acrylic resin is a resin obtained by polymerizing a (meth)acrylic monomer. In a case where the acrylic resin is used as a single binder resin, the acrylic resin needs to have a carboxyl group and is, for example, preferably an acrylic resin obtained by polymerizing a monomer including a (meth)acrylic monomer having a carboxyl group such as (meth)acrylic acid or a maleic acid.

Alternatively, the acrylic resin can be made to have a carboxyl group by polymerizing a monomer including a (meth)acrylic monomer having a functional group such as 2-hydroxyethyl (meth)acrylate or glycidyl (meth)acrylate and reacting a compound that has a carboxyl group and reacts with the functional group (maleic anhydride or the like) with the functional group after the polymerization.

Examples of monomers other than the (meth)acrylic monomer having a carboxyl group include

(meth)acrylic monomers such as methyl (meth)acrylate and butyl (meth)acrylate; and
vinyl monomers such as maleic acid, a maleic anhydride, styrene, vinyl acetate, butadiene and acrylonitrile and the like.

In a case where the acrylic resin is used as a single binder resin, the acid value of the acrylic resin is 50 mgKOH/g or higher and preferably 100 mgKOH/g or higher.
The acrylic resin may also be used as an aqueous resin in neutralization reactions. The aqueous resin may have an emulsion form or a dissolved form.

[Other components]

The primer layer may further contain other components. The other components may be blended with the compound having an acidic group or may be added at the time of blending the compound having an acidic group.

(Other resins)

The primer layer may further contain different resins other than the resin having an acidic group.
Examples of the different resins include a cellulose resin, a polyamide resin, a vinyl chloride resin such as a vinyl chloride-vinyl acetate copolymer resin or a vinyl chloride-acrylic copolymer resin, a rosin-based resin, an ethylene-vinyl acetate copolymer resin, a vinyl acetate resin, an acrylic resin, a styrene resin, a dammar resin, a styrene-maleic acid copolymer resin, a styrene-acrylic copolymer resin, a polyester resin, an alkyd resin, a terpene resin, a phenol-modified terpene resin, a ketone resin, cyclized rubber, chlorinated rubber, butyral, a polyacetal resin, a petroleum resin and modified resins thereof. These resins may be used singly or two or more thereof may be used in a mixture form.
Among these, the primer layer preferably contains at least one resin selected from the group consisting of a cellulose resin, a vinyl chloride resin, a rosin resin, an acrylic resin and a styrene-maleic acid copolymer resin. The primer layer more preferably contains a vinyl chloride resin or an acrylic resin.
The mass ratio between the resin having an acidic group and the different reins (resin having acidic group different resins) is preferably 95:5 to 50:50. When the mass ratio is within the above-described range, the printing layer is peeled off in a thin film state and easily recovered at the time of peeling off the printing layer together with the primer layer in a basic aqueous solution, which is preferable.

(Extender pigment)

The primer layer preferably contains an extender pigment from the viewpoint of film strength improvement, improvement of optical properties and improvement in the fluidity of the primer composition.
Examples of the extender pigment include silica, barium sulfate, kaolin, clay, calcium carbonate, magnesium carbonate and metal oxides such as zinc oxide and zirconium oxide. Among these, silica is preferable, and hydrophilic silica is more preferable.
The average particle diameter of the extender pigment is preferably 0.5 to 10 μm and more preferably 1 to 8 μm. The content rate of the extender pigment is preferably 0.5 to 10 mass% and more preferably 1 to 5 mass% in the primer layer. When the average particle diameter and the content rate of the extender pigment are within the above-described ranges, the wettability of the printing layer improves, and the image quality improves, which is preferable.

(Curing agent)

The primer layer may further contain an isocyanate-based curing agent. When a crosslinked structure is introduced into the primer layer, infiltration into or smearing on the printing layer that is formed on the primer layer is suppressed, and it becomes possible to exhibit an excellent image quality.
Examples of the curing agent include polyisocyanates. The polyisocyanates are not particularly limited and can be selected from well-known conventional polyisocyanates, and examples thereof include aliphatic polyisocyanates or aromatic aliphatic polyisocyanates. These may be used singly or two or more thereof may be jointly used.
As an aliphatic polyisocyanate, well-known aliphatic diisocyanates, alicyclic diisocyanates, aromatic aliphatic diisocyanates or derivatives thereof can be used.
Examples of the aliphatic diisocyanates include aliphatic diisocyanates such as trimethylene diisocyanate, tetramethylene diisocyanate, hexamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate and 2,6-diisocyanate methyl caproate; alicyclic diisocyanates such as 1,4-cyclohexane diisocyanate, 1,3-cyclohexane diisocyanate, 3-isocyanatomethyl-3,5,5-trimethylcyclohexyl isocyanate, 4,4'-methylenebis(cyclohexyl isocyanate), methyl 2,4-cyclohexane diisocyanate, methyl 2,6-cyclohexane diisocyanate, 1,4-bis(isocyanatomethyl)cyclohexane and 1,3-bis(isocyanatomethyl)cyclohexane; aromatic aliphatic diisocyanates such as 1,3- or 1,4-xylylene diisocyanate or mixtures thereof, ω,ω'-diisocyanate-1,4-diethylbenzene, 1,3- or 1,4-bis(1-isocyanate-1-methylethyl)benzene or mixtures thereof; polyisocyanates such as allophanate-type, nurate-type, biuret-type and adduct-type derivatives derived from the above-listed diisocyanates or complexes thereof; and the like.

As the aromatic diisocyanate, well-known aromatic diisocyanates or derivatives thereof can be used.

Examples of the aromatic diisocyanates include toluene diisocyanate, diphenylmethane diisocyanate, allophanate-type, nurate-type, biuret-type and adduct-type derivatives derived from the above-listed diisocyanates or complexes thereof and the like.

The polyisocyanate is preferably an adduct-type polyisocyanate (hereinafter, adduct body), biuret-type polyisocyanate (hereinafter, biuret body) or isocyanurate-type polyisocyanate (hereinafter, isocyanurate body) of tolylene diisocyanate (hereinafter, TDI), diphenylmethane diisocyanate (hereinafter, MDI) or hexamethylene diisocyanate (hereinafter, HDI) and more preferably a trimethylolpropane adduct body (HDI-TPM), biuret body or isocyanurate body derived from hexamethylene diisocyanate.

The content of the curing agent is preferably 0.1 to 15 mass%, more preferably 0.5 to 10 mass% and still more preferably 1 to 7 mass% of the total amount of the solid content in the composition. When the content is within the above-described range, infiltration into or smearing on the printing layer that is formed on the primer layer is suppressed, and an excellent image quality is exhibited, which is preferable.

<Primer composition>

The primer composition can be manufactured by dissolving and/or dispersing at least a binder resin in a solvent and may contain the above-described other components as necessary.

Examples of the solvent include well-known solvents such as aromatic organic solvents such as toluene and xylene; ketone-based organic solvents such as methyl ethyl ketone and methyl isobutyl ketone; ester-based organic solvents such as ethyl acetate, n-propyl acetate, isopropyl acetate and isobutyl acetate; alcoholic organic solvents such as methanol, ethanol , n-propanol, isopropanol and n-butanol; glycol ether-based solvents such as ethylene glycol monopropyl ether and propylene glycol monomethyl ether; water and the like, and these solvent can be used singly or two or more solvents can be used in a mixture form.

The solid content concentration in the primer composition is preferably 5 to 60 mass% and more preferably 10 to 50 mass%. Furthermore, the content of the binder resin solid content in the primer composition is preferably 0.5 to 50 mass% and more preferably 5 to 40 mass%. When the concentration and the content are within the above-described ranges, optimal printability can be obtained.

The viscosity of the primer composition is preferably 20 to 500 mPa·s and more preferably 30 to 300 mPa·s since appropriate printability can be obtained in a printing step. The viscosity of the primer composition can be adjusted as appropriate depending on the content of the binder resin, the contents of other components to be described below or the like.

The primer composition may further contain a well-known additive. Examples of the well-known additive include a dispersant, a wetting agent, an adhesion aid, a leveling agent, an anti-foaming agent, an antistatic agent, a viscosity modifier, a metal chelate, a trapping agent, an anti-blocking agent, a wax component other than what has been described above, a silane coupling agent and the like.

<Printing layer (R)>

The printing layer (R) in the present invention is a layer provided in contact with the primer layer on the opposite side to the first base material of the primer layer (S) and a layer forming an arbitrary printed pattern for the purpose of imparting decoration or a sense of beauty, displaying the contents, a best-before date, a manufacturer or a seller and also includes a solid-printing layer. The printing layer (R) may be provided on all or a part of the surface of the primer layer (S). In addition, unlike the printing layer (T) to be described below, the printing layer does not essentially contain a compound having an acidic group, but may contain a compound having an acidic group.

The printing layer can be formed using a well-known conventional pigment or dye, may be formed using printing ink containing a pigment or a dye, and a method for forming the printing layer is not particularly limited. The printing layer may be formed of a single layer or a plurality of layers.

The thickness of the printing layer is preferably 0.1 μm or more and 100 μm or less, more preferably 0.1 μm or more and 10 μm or less and still more preferably 1 μm or more and 5 μm or less.

Printing ink that is used to form the printing layer (hereinafter, also referred to as the ink composition) can be manufactured by dissolving and/or dispersing at least a colorant, a dispersant (A) and a binder resin in a solvent and may contain other components as necessary.

Examples of the solvent include well-known solvents such as aromatic organic solvents such as toluene and xylene; ketone-based organic solvents such as methyl ethyl ketone and methyl isobutyl ketone; ester-based organic solvents such as ethyl acetate, n-propyl acetate, isopropyl acetate and isobutyl acetate; alcoholic organic solvents such as methanol, ethanol , n-propanol, isopropanol and n-butanol; glycol ether-based solvents such as ethylene glycol monopropyl ether and propylene glycol monomethyl ether; water and the like, and these solvent can be used singly or two or more solvents can be used in a mixture form.

[Colorant]

The printing layer (R) may be colored or colorless and may contain a variety of inorganic pigments or organic pigments that can be ordinarily used in printing ink or paint. Examples of the inorganic pigment include colored pigments such as titanium oxide, red iron oxide, dark blue, ultramarine, carbon black and graphite and extender pigments such as calcium carbonate, kaolin, clay, barium sulfate, aluminum hydroxide and talc. In addition, as the organic pigment, a soluble azo pigment, an insoluble azo pigment, an azo lake pigment, a condensed azo pigment, a copper phthalocyanine pigment, a condensed polycyclic pigment and the like are preferable. The organic pigment is not limited thereto, and pigments expressed by the Color Index Generic Name can be appropriately used. Among them, a pigment that does not dissolve in alkali aqueous solutions, that is, has alkali resistance is preferable. This is because coloration of an alkali aqueous solution by a dissolved pigment component at the time of treating a packaging material with the alkali aqueous solution can be prevented, which makes the reuse of the alkali aqueous solution easy and makes it possible to improve the recycling productivity. The alkali resistance of the pigment is generally estimated by the skeleton or structure of the pigment, and a pigment derived from a dye that dissolves in an alkali aqueous solution or a pigment that dissolves in an alkali aqueous solution can be said to have no alkali resistance. Examples of the alkali-resistant pigment include inorganic pigments, P. B. 15 (Pigment Blue 15) and P. Y. 83 (Pigment Yellow 83). The content of the pigment is preferably 0.5 to 50 mass% in the total amount of the ink composition.

The pigment mentioned in the present invention also includes a metal powder imparting metal luster, a near-infrared-absorbing material and an ultraviolet-absorbing material in a case where a visual or optical effect is intended.

[Dispersant (A)]

When a pigment derivative and/or a resin-type dispersant is contained as a dispersant (A) of the printing layer (R), the deinkability improves. Furthermore, the dispersion stability and temporal stability of ink become favorable. These dispersants may be used singly, but the joint use thereof makes the dispersion stability and the temporal stability favorable, which is preferable.

(Pigment derivative)

The pigment derivative is a compound having a substituent introduced into the skeleton of a pigment. In printing ink, the skeleton of the pigment of the pigment derivative is adsorbed to the surface of the pigment in the printing ink, and the substituent part of the pigment derivative is oriented in the solvent in the printing ink, thereby having an action of dispersing the pigment in the printing ink.

As the pigment derivative, for example, derivatives obtained by adding a functional group such as a carboxyl group, a sulfonic acid group, a carbonyl group or a sulfonyl group to the skeleton of a phthalocyanine-based, azo-based, anthraquinone-based, quinacridone-based or other pigment, salts thereof and the like can be preferably used. These can be used singly or can be used in combination.

As the commercially available products of the pigment derivative, SOLSPERSE 5000, SOLSPERSE 12000 (manufactured by The Lubrizol Corporation), BYK-SYNERGIST 2100, BYK-SYNERGIST 2105 (manufactured by BYK Japan KK), EFKA 6745, EFKA 6750 (manufactured by BASF) and the like can be preferably used. These can be used singly or can be used in combination.

The pigment derivative preferably exhibits an identical or similar color to that of the pigment in the ink. For example, in the case of being added to black ink or cyan ink, a phthalocyanine pigment derivative can be preferably used as the pigment derivative.

The total amount of the pigment derivative is preferably 0.01 to 10 mass%, more preferably 0.05 to 6 mass% and still more preferably 0.1 to 4 mass% of the entire colorant. When the total amount is 0.01 mass% or more, the dispersion stability of the printing ink becomes favorable, and the separability of the first base material also improves. In addition, when the total amount is 10 mass% or less, coloration of the base material due to re-adhesion to the base material of the separated printing layer that has been finely crushed in an alkali aqueous solution is suppressed, and the first base material can be recycled as a high-quality recycled molding material.

(Resin-type dispersant)

The resin-type dispersant is a dispersant that has an affinity part to a pigment composition, which has a property of being adsorbed to the pigment composition, and a part being compatible with a pigment composition carrier and has an action of being adsorbed to the pigment composition to stabilize the dispersion in the pigment composition carrier. As the resin-type dispersant, specifically, polycarboxylic acid esters such as polyurethane and polyacrylate, unsaturated polyamides, polycarboxylic acids, polycarboxylic acid (partial) amine salts, polycarboxylic acid ammonium salts, polycarboxylic acid alkylamine salts, polysiloxanes, long-chain polyaminoamide phosphoric acids salts, hydroxyl group-containing polycarboxylic acid ester, modified products thereof, oil-based dispersants such as amides formed by a reaction between poly (lower alkyleneimine) and a polyester having a free carboxyl group or salts thereof, (meth)acrylate-styrene copolymers, (meth)acrylate-(meth)acrylic acid ester copolymers, water-soluble resins such as styrene-maleic acid copolymers, polyvinyl alcohols and polyvinyl pyrrolidone or water-soluble polymer compounds, polyester-based dispersants, modified polyacrylate-based dispersants, ethylene oxide/propylene oxide-added compounds, phosphate-based dispersants and the like are used, and these can be used singly or two or more thereof can be mixed together and used, but the form of using the resin-type dispersant is not always limited thereto.

The total amount of the resin-type dispersant is preferably 0.01 to 30 mass%, more preferably 0.05 to 20 mass% and still more preferably 0.1 to 10 mass% of the entire colorant. When the total amount is 0.01 mass% or more, the dispersion stability of the printing ink becomes favorable, and the separability of the first base material also improves. In addition, when the total amount is 30 mass% or less, the water resistance of the printing layer becomes favorable.

[Binder resin]

As the binder resin in the printing layer (R), for example, fiber materials such as nitrocellulose-based materials and cellulose acetate/propionate, chlorinated polypropylene-based binders, vinyl chloride-vinyl acetate copolymer-based binders, polyester-based binders, acrylic binders, urethane resin-based binders, acrylic urethane-based binders, polyamide-based binders, polybutyral-based binders, cyclized rubber-based binders, chlorinated rubber-based binders or binders for which the above-described binders are jointly used as appropriate can be used.

The solid content concentration in the printing ink is preferably 5 to 60 mass% and more preferably 10 to 50 mass%. Furthermore, the content of the binder resin solid content in the printing ink is preferably 0.5 to 50 mass% and more preferably 5 to 40 mass%. When the concentration and the content are within the above-described ranges, optimal printability can be obtained.

The viscosity of the printing ink is preferably 20 to 500 mPa·s and more preferably 30 to 300 mPa·s since appropriate printability can be obtained in the printing step. The viscosity of the printing ink can be adjusted as appropriate depending on the content of the binder resin or the like.

A method for applying the printing ink is not particularly limited, and the printing ink can be applied by a method such as a gravure coating method, a flexo coating method, a roll coating method, a bar coating method, a die coating method, a curtain coating method, a spin coating method or an inkjet method. The printing layer can be formed by leaving the applied printing ink to stand or performing air blowing, heating, vacuum drying, ultraviolet irradiation or the like thereon as necessary.

<Printing layer (T)>

The printing layer (T) in the present invention is a layer that is disposed in a form of being in contact with the first base material and is for separating the first base material by dissolution, peeling or the like using a basic aqueous solution and contains the compound having an acidic group. In addition, a printing ink for forming the printing layer (T) can be manufactured by dissolving and/or dispersing at least a colorant, the dispersant (A) and a binder resin in a solvent and may contain other components as necessary.

In a case where the printing layer (T) is not a so-called solid-printing layer of the printing layer (T) in order to separate the first base material, there is a need to consider a pattern or a decorative design so that a plurality of printing layers (T) is overprinted to prevent layers other than the printing layers (T) of the packaging material from coming into contact with layers other than the first base material.

<First base material>

Examples of the first base material include film-like or sheet-like plastic base materials, gas barrier base materials such as metal foils, paper and the like that are ordinarily used in packaging materials, and the first base material may be a laminate in which the above-listed base materials are laminated together.

Examples of the plastic base material include films of a thermoplastic resin or a thermosetting resin, and films

of a thermoplastic resin are preferable. Examples of the thermoplastic resin include a polyolefin resin, a polyester resin, a polyamide resin, a polystyrene resin, a vinyl chloride resin, a vinyl acetate resin, an ABS resin, an acrylic resin, an acetal resin, a polycarbonate resin and cellulose plastic.

In more detail, polyolefin resin films such as polyethylene (PE) and biaxially oriented polypropylene (OPP); polyester resin films such as polyethylene terephthalate, polyethylene naphtalate (PEN) and polylactic acid (PLA); polystyrene resin films; polyamide resin films such as nylon 6, poly-p-xyleneadipamide (MXD6 nylon); polycarbonate resin films; polyacrylonitrile resin films; polyimide resin films; laminates (for example, nylon 6/MXD6/nylon 6, nylon 6/ethylene-vinyl alcohol copolymer/nylon 6) or mixtures thereof; and the like can be used. Among these, thermoplastic resin films having mechanical strength or dimensional stability are preferable.

The thickness of the plastic film is preferably 5 to 200 μm, more preferably 10 to 100 μm and still more preferably 10 to 50 μm.

Examples of a gas barrier base material include an aluminum foil; plastic base materials having an inorganic deposited layer of aluminum, silica or alumina; plastic base materials having an organic layer of polyvinyl alcohol or the like; and the like. In the case of the aluminum foil, the thickness is preferably within a range of 3 to 50 μm in terms of an economic aspect. Examples of commercially available products of the plastic base materials having an inorganic deposited layer include "GL FILM" (manufactured by Toppan Holdings Inc.), IB-FILM (manufactured by Dai Nippon Printing Co., Ltd.) and the like, in which an inorganic deposited layer of alumina or the like is laminated on a plastic base material. Aluminum or alumina is soluble in basic aqueous solutions and thus dissolves in a separation step to be described below, which makes it possible to recycle only the plastic base material.

The first base material preferably includes a polyolefin resin film such as polyolefin or biaxially oriented polypropylene from the viewpoint of being reused as a recycled base material.

In a case where the first base material is a laminate, base materials are preferably laminated together through an adhesive layer. A method for forming the adhesive layer is not limited, and the adhesive layer can be formed by a well-known method using a well-known adhesive.

The first base material may contain an additive such as an antistatic agent or an ultraviolet inhibitor as necessary, and a corona treatment or a low-temperature plasma treatment may be performed on the surface of the base material.

<Second base material>

Examples of the second base material include the base materials exemplified in the above-described first base material or sealant base materials, and the second base material may be a laminate in which the above-exemplified materials are laminated. The second base material is preferably a sealant base material and contains a polyolefin. The second base material may have a deposited film of silica, alumina or the like.

Examples of the sealant base material include polyethylene such as a low-density polyethylene (LDPE), a linear low-density polyethylene (LLDPE) and a high-density polyethylene (HDPE), an acid-modified polyethylene, an unoriented polypropylene (CPP), an acid-modified polypropylene, a copolymerized polypropylene, an ethylene-vinyl acetate copolymer, an ethylene-(meta)acrylic acid ester copolymer, an ethylene-(meta)acrylic acid copolymer, an ionomer and the like.

From the viewpoint of recyclability, the second base material is preferably a polyolefin such as a polyethylene such as a low-density polyethylene, a linear low-density polyethylene or a high-density polyethylene, an acid-modified polyethylene, an unoriented polypropylene, an acid-modified polypropylene or a copolymerized polypropylene.

The second base material is preferably a polypropylene from the viewpoint of the retort resistance and is preferably an unoriented polypropylene from the viewpoint of the heat-sealing property.

The thickness of the second base material is not particularly limited, but is preferably 10 μm or more and 150 μm or less and more preferably 20 μm or more and 70 μm or less when the workability into packaging containers, the heat-sealing property or the like is taken into account. Projections and recesses having a height difference of approximately several micrometers provided on the second base material make it possible to impart slipperiness or the tearability of packaging materials.

A method for laminating the second base material is not particularly limited, and examples thereof include a method in which a printing surface of a laminate film having the first base material, the primer layer and the printing layer and the second base material are pasted together using a laminate adhesive; a method in which a resin configuring the second base material is melted, extruded on the printing layer, cooled and solidified; and the like.

Between the printing layer (R) or the printing layer (T) and the second base material, there may be layers other than the adhesive layer or the like.

Hereinafter, examples of the configuration of the packaging material of the present invention will be described, but the configuration is not limited thereto. As described above, the first base material and the second base material may be each a laminate in which a plurality of base materials is laminated together. In order to recycle the second base material as well, a layer in contact with the second base material (for example, the adhesive layer or the like) is also

preferably a layer containing a compound having an acidic group.

- First base material/primer layer (S)/printing layer (R)
- First base material/printing layer (T)
- First base material (laminate)/primer layer (S)/printing layer (R)
- First base material (laminate)/printing layer (T)
- First base material/primer layer (S)/printing layer (T)/second base material
- First base material/printing layer (T)/second base material
- First base material/primer layer (S)/printing layer (R)/adhesive layer/second base material
- First base material/printing layer (T)/adhesive layer/second base material
- First base material/primer layer (S)/printing layer (R)/adhesive layer/second base material (laminate)
- First base material/printing layer (T)/adhesive layer/second base material (laminate)

<Packaging container>

A packaging container of the present invention is a packaging container at least a part of which is formed of the packaging material. At least a part of the packaging container is formed of the packaging material, whereby the separability of the first base material, which is mainly used as a printing base material, is excellent, and a packaging container suitable for recycling can be obtained.

The kind and application of the packaging container of the present invention are not particularly limited, and the packaging container can be suitably used for, for example, food containers, detergent containers, cosmetic containers, pharmaceutical containers and the like. The shape of the packaging container is not limited, and the container can be molded into a shape suitable for the contents and can be suitably used in a pouch form or the like.

<Method for manufacturing recycled molding material (recycled base material)>

A method for manufacturing a recycled base material of the present invention includes a step of immersing a packaging material provided with at least the first base material, the primer layer (S), and the printing layer (R) in the stated order, or a packaging material provided with at least the first base material and the printing layer (T) in the stated order, in which the primer layer (S) and the printing layer (T) are each a layer that is for recycling the first base material by causing the first base material to be separated therefrom and that contains a compound having an acidic group, and, furthermore, the printing layer (R) and the printing layer (T) are each a layer that contains a colorant, a dispersant (A), and a binder resin or a packaging container that is formed of the packaging material in a basic aqueous solution.

In the present invention, "separation" refers to the separation of the first base material from the packaging material due to the neutralization or dissolution and peeling of the primer layer by the basic aqueous solution and includes both forms of (1) a case where the primer layer (S) and the printing layer (T) dissolves and the first material is separated and (2) a case where the first base material peels off by neutralization, swelling or the like and is separated without the dissolution of the primer layer (S) and the printing layer (T).

The present invention is intended to obtain the separated first base material as a recycled base material/recycled base material, and thus an aspect in which the primer layer (S) or the printing layer (T) has been removed from the first base material as much as possible is preferable. Specifically, it is preferable that, out of 100 mass% of the primer layer, at least 50 mass or more is separated in terms of the area or in the film thickness direction. An aspect in which more preferably 60 mass% or more, still more preferably 80 mass% or more and particularly preferably 90 mass% or more is separated is preferable.

A basic compound that is used in the base aqueous solution is not particularly limited, and, for example, sodium hydroxide (NaOH), potassium hydroxide (KOH), calcium hydroxide ($Ca(OH)_2$), ammonia, barium hydroxide ($Ba(OH)_2$) and sodium carbonate ($Na_2CO_3$) are preferably used, but the basic compound is not limited thereto. At least one selected from the group consisting of sodium hydroxide and potassium hydroxide is more preferable.

The concentration of the basic compound in the basic aqueous solution is preferably 0.5 to 20 mass%, more preferably 1 to 15 mass% and still more preferably within a range of 3 to 15 mass% of the entire basic aqueous solution. When the concentration rate is within the above-described range, the base aqueous solution is capable of holding basicity strong enough to separate the first base material by separating the primer layer (S) or the printing layer (T) through dissolution or swelling.

The basic aqueous solution infiltrates into the packaging material or the packaging container from the end parts, comes into contact with the primer layer (S) or the printing layer (T) and dissolves or swells, thereby taking the first base material and the primer layer (S) or the printing layer (T) apart. Therefore, in order to proceed with a separation step efficiently, it is preferable that the packaging material or the packaging container is cut or crushed to be in a state where the primer layer (S) or the printing layer (T) is exposed on the cross section at the time of being immersed in the basic

aqueous solution. In such a case, the first base material layer can be separated within a shorter time.

At the time of immersing the packaging material, the temperature of the basic aqueous solution is preferably 25°C to 120°C, more preferably 30°C to 120°C and particularly preferably within a range of 30°C to 80°C. The immersion time in the basic aqueous solution is preferably 1 minute to 24 hours, more preferably 1 minute to 12 hours and still more preferably within a range of 1 minute to 6 hours. The amount of the basic aqueous solution used is preferably 5 to 100,000 times and more preferably 10 to 10,000 times the mass of the packaging material, and, in order to improve the separation efficiency, it is preferable to perform stirring, circulation or the like on the basic aqueous solution. The rotation rate is preferably 80 to 5000 rpm and more preferably 80 to 4000 rpm.

A recycled base material can be obtained by performing a step of peeling the primer layer (S) together with the printing layer (R) from the packaging material or peeling the printing layer (T), separating and recovering the first base material, and then washing with water and drying the first base material. The removal rate of the printing layer on the surface of the first base material is preferably 70% or more, more preferably 80% or more and particularly preferably 90% or more of the area of the printing layer before the separation.

Therefore, according to the present invention, a recycled base material of the first base material can be obtained by undergoing a step of immersing the packaging material or the packaging container in a basic aqueous solution, a step of dissolving or peeling off the primer layer (S) or the printing layer (T) from the packaging material or the packaging container to separate the first base material, a step of recovering the first base material and a step of washing with water and drying the first base material. In addition, the obtained recycled base material can be reused as a recycled resin by processing the recycled base material into pellets with an extruder or the like.

<Method for manufacturing molding material>

The method for manufacturing a molding material of the present invention is not particularly limited, but preferably includes the following steps 1 to 3. In a case where the molding material contains a masterbatch, the method further includes the following step 4.

(Step 1) A step of crushing the packaging material and alkali-treating the packaging material to separate the first base material from the packaging material
(Step 2) A step of washing the first base material obtained in the step 1 with water
(Step 3) A step of pelletizing the first base material obtained in the step 2 to obtain a recycled resin
(Step 4) A step of mixing a masterbatch with the recycled resin obtained in the step 3

(Step 1)

The step 1 is a step of crushing the packaging material or packaging container and immersing the packaging material or packaging container in an alkali aqueous solution to separate the first base material from the packaging material.

A method for crushing the packaging material is not particularly limited, and examples thereof include methods in which a jaw crusher, an impact crusher, a cutter mill, a stamp mill, a ring mill, a roller mill, a jet mill or a hammer mill is used.

(Step 2)

The step 2 is a step of washing the first base material obtained by the step 1 with water to remove the alkali aqueous solution and may further include a drying step as necessary. The step 2 makes it possible to obtain the first base material after recycling (also referred to as the recycled plastic base material).

(Step 3)

The step 3 is a step of pelleting the first base material washed with water in the step 2 and manufacturing a recycled resin derived from the first base material.

The pelletizing step is the addition of a variety of additives or the like as necessary, mixing with a Henschel mixer, a tumbler, a disperser or the like and then mixing or melt-kneading and dispersion using a batch-type kneader, a twin screw extruder, a single screw extruder, a rotor-type twin screw kneader or the like such as a kneader, a roll mill, a super mixer, a Henschel mixer, a Schugi mixer, a vertical granulator, a high-speed mixer, a Pharmatrix, a ball mill, a steel mill, a sand mill, a vibration mill, an attritor or a Banbury mixer and makes it possible to obtain a resin composition having a shape such as a pellet shape, a powder shape, a granule shape or a bead shape. In the step 3 of the present invention, a twin screw extruder is preferably used for melt-kneading.

<Masterbatch>

The molding material of the present invention may further contain a masterbatch. The masterbatch is not particularly limited as long as the masterbatch is compatible with recycled resins, and, ordinarily, it is possible to use a masterbatch obtained by kneading a thermoplastic resin such as a polyethylene resin or a polypropylene resin and a colorant. In the masterbatch, one thermoplastic resin may be singly used or two or more thermoplastic resins may be jointly used.

The colorant is not particularly limited as long as the colorant is ordinarily used in masterbatches, and examples thereof include inorganic pigments such as titanium oxide, chrome titanium yellow, Bengara, ultramarine and carbon black; and organic pigments such as an azo pigment, a quinacridone-based pigment, a perylene-based pigment, a diketopyrrolopyrrole-based pigment and a phthalocyanine-based pigment.

Examples of the inorganic pigments included C. I. Pigment White 6, Pigment Brown 24, Pigment Red 101, Pigment Blue 29 and Pigment Black 7. Examples of the azo-based pigment include C. I. Pigment Yellow 180 and 181, Pigment Orange 64, Pigment Red 144, 166, 214 and 221. Examples of the quinacridone-based pigment include C. I. Pigment Violet 19 and Pigment Red 122. Examples of the perylene-based pigment include C. I. Pigment Red 149 and 178. Examples of the diketopyrrolopyrrole-based pigment include C. I. Pigment Red 254. Examples of the phthalocyanine-based pigment include C. I. Pigment Blue 15:1, 15:3, Pigment Green 7 and 36.

These colorants may be used singly or two or more thereof may be jointly used.

The masterbatch in the present invention may also contain a metal soap of an alkali metal, an alkali earth metal or zinc, hydrotalcite, a nonionic surfactant, a cationic surfactant, an anionic surfactant, an amphoteric surfactant, an antistatic agent, a halogen-based flame retarder, a phosphorus-based flame retarder or a flame retarder such as a metal oxide, a lubricant such as ethylene bisalkyl amide, an antioxidant, an ultraviolet absorber or a filler to an extent that the effect of the present invention is not impaired.

<Molded body>

A molded body can be obtained by molding the molding material of the present invention. A molding method is not particularly limited, and examples thereof include injection molding, extrusion molding, blow molding and compression molding.

The molding material of the present invention does not only have a high recycling rate but also has moldability and contains a resin having a light color and is thus capable of providing a molded boy uniformly colored from light color to dark color regardless of the molding method and can be used in a variety of fields such as home appliances, stationery, automotive parts, toys and sports equipment and materials for medical or architecture/construction materials.

## Examples

Hereinafter, the present invention will be described in detail using examples, but the present invention is not limited to these examples. "Parts" and "%" in the present invention indicate "parts by mass" and "mass%", respectively, unless particularly otherwise noted.

(Molecular weight and molecular weight distribution)

Weight-average molecular weights (Mw), number-average molecular weights (Mn) and molecular weight distributions (Mw/Mn) were measured by gel permeation chromatography (GPC) and obtained as molecular weights converted using polystyrene as a standard substance. Measurement conditions are as described below.

GPC device: Shodex GPC-104 manufactured by Showa Denko K.K.
Column: The following columns were connected in series and used.
Two Shodex LF-404 manufactured by Showa Denko K.K.
Shodex LF-G manufactured by Showa Denko K.K.
Detector: RI (differential refractometer)
Measurement condition: Column temperature of 40°C
Eluent: Tetrahydrofuran
Flow rate: 0.3 mL/minute

(Acid value and hydroxyl value)

Acid values and hydroxyl values were measured according to a method described in JIS K 0070 (1992).

<Manufacture of primer composition and resin of printing ink>

[Synthesis Example 1] (Polyurethane resin P1)

While a nitrogen gas was introduced into a reactor including a reflux cooling tube, a dropping funnel, a gas introduction tube, a stirring device and a thermometer, 152.2 parts of PPA (polyester polyol being composed of a polycondensate of propylene glycol and adipic acid and having a number-average molecular weight of 2,000), 15.2 parts of PPG (polyester polyol being composed of proethylene glycol and having a number-average molecular weight of 2,000), 13.6 parts of BD (1,4-butanediol), 99.8 parts of IPDI (isophorone diisocyanate) and 200 parts of NPAC (N-propyl acetate) were charged thereinto and reacted at 90°C for 5 hours, thereby obtaining a urethane prepolymer solution having an isocyanate group at an end.

Next, a mixture of 19.2 parts of AEA (2-(2-aminoethylamino)ethanol) and 350 parts of IPA (isopropyl alcohol) was added dropwise thereto at room temperature for 60 minutes and reacted at 70°C for 3 hours, thereby obtaining a polyurethane resin solution.

A solid content was prepared by adding NPAC to the obtained polyurethane resin solution, and a solution of a polyurethane resin P1 having a solid content concentration of 30%, a weight-average molecular weight of 27,000, Mw/Mn of 3.1 and an acid value of 0 mgKOH/g was obtained.

[Synthesis Examples 2 to 5] (Polyurethane resins P2 to P5)

Solutions of polyurethane resins P2 to P5 were obtained by the same method as in Synthesis Example 1 except that raw materials and amounts charged shown in Table 1 were used.

[Table 1]

| Table 1 | | Parts by mass | | | | | | | | | | | | | | Physical properties of resin | | | |
|---|---|---|---|---|---|---|---|---|---|---|---|---|---|---|---|---|---|---|---|
| | | Urethane-forming reaction | | | | | | | | Urea-forming reaction | | Solid content adjustment | | | Tota l | Mw | Mw/M n | Acid value [mgKOH/ g] | Hydroxyl value [mgKOH/ g] |
| | | Diol | | | | | | Diisocyana te | Solve nt | Diami ne | Solve nt | | | | | | | | |
| | | PPA | PC | PP G | PE G | DMP A | BD | IPDI | NPAC | AEA | IPA | NPA C | Wate r | 28% ammon ia water | | | | | |
| Synthes is Example 1 | P 1 | 152. 2 | | 15. 2 | | | 13. 6 | 99.8 | 200 | 19.2 | 350 | 150 | | | 100 0 | 27,00 0 | 3.1 | 0.0 | 34.2 |
| Synthes is Example 2 | P 2 | 135. 7 | | 13. 6 | | 28.3 | | 105.7 | 200 | 16.7 | 350 | 150 | | | 100 0 | 30,00 0 | 3.0 | 39.3 | 30.5 |
| Synthes is Example 3 | P 3 | 104. 1 | | 39. 1 | | 43.7 | | 107.0 | 200 | 6.1 | 350 | 150 | | | 100 0 | 33,00 0 | 3.5 | 60.9 | 11.0 |
| Synthes is Example 4 | P 4 | | 135. 7 | 13. 6 | | 28.3 | | 105.7 | 200 | 16.7 | 350 | 150 | | | 100 0 | 29,00 0 | 2.9 | 39.3 | 30.5 |
| Synthes is Example 5 | P 5 | 108. 6 | | | 40. 7 | 28.3 | | 105.7 | 200 | 16.7 | 150 | | 690. 0 | 10.0 | 135 0 | 32,00 0 | 3.3 | 39.3 | 30.5 |

Hereinafter, abbreviations in Table 1 will be described below.

· PPA: Polyester polyol being composed of a polycondensate of propylene glycol and adipic acid and having a number-average molecular weight of 2,000
· PC: Polycarbonate polyol being composed of a polycondensate of 3-methyl-1,5-pentanediol, 1,6-hexanediol and dimethyl carbonate in mole fractions of 9/1/10 and having a number-average molecular weight of 2,000
· PPG: Polyether polyol being composed of polyethylene glycol and having a number-average molecular weight of 2,000
· PEG: Polyether polyol being composed of polyethylene glycol and having a number-average molecular weight of 2,000
· DMPA: 2,2-Dimethylolpropionic acid
· BD: 1,4-Butanediol
· IPDI: Isophorone diisocyanate
· NPAC: N-propyl acetate
· AEA: 2-(2-Aminoethylamino)ethanol
· IPA: Isopropyl alcohol

In Synthesis Examples 2 to 5, the synthesis conditions such as the amount added dropwise, the dropwise addition rate, the temperature adjustment and the stirring rate were adjusted so that Mw/Mn and the weight-average molecular weight became as shown in Table 1.

[Synthesis Example 6] (Acrylic resin P6)

While a nitrogen gas was introduced into a reactor including a reflux cooling tube, a dropping funnel, a gas introduction tube, a stirring device and a thermometer, 70 parts of styrene, 23 parts of acrylic acid, 7 parts of 2-hydroxyethyl methacrylate, 40 parts of EA (ethyl acetate) and 40 parts of IPA were charged thereinto and heated up to 90°C, 1 part of AIBN (azobisisobutyronitrile) and 15 parts of EA were added thereto to perform a polymerization reaction for 4 hours, furthermore, 0.1 parts of AIBN and 3 parts of EA were added thereto and reacted for 2 hours, thereby obtaining an acrylic resin solution.

The solid content adjustment was adjusted by adding EA to the obtained acrylic resin solution, thereby obtaining an acrylic resin solution P6 having a solid content concentration of 30%, a weight-average molecular weight of 27,000, an acid value of 179.1 mgKOH/g and a hydroxyl value of 30.2 mgKOH/g.

[Synthesis Example 7] (Polyester P7)

302.5 Parts of terephthalic acid, 302.5 parts of isophthalic acid, 135.6 parts of ethylene glycol and 227.3 parts of neopentyl glycol were charged into a reaction can and slowly heated up to 160°C to 240°C while being stirred under a nitrogen stream to perform an esterification reaction. The reaction was performed at 240°C for 1 hour or longer, and, once the acid value became 15 or lower, the pressure in the reaction can was slowly reduced to 1 to 2 Torr. After a predetermined viscosity was reached, the reaction can was cooled to 200°C, and 32.1 parts of trimellitic anhydride was charged thereinto and reacted at 200°C for 2 hours to perform terminal acid modification. The solid content adjustment was adjusted by adding EA to the obtained polyester resin, thereby obtaining a polyester resin solution P7 having a solid content concentration of 30%, a weight-average molecular weight of 10,000 and an acid value of 22.4 mgKOH/g.

<Composition for forming primer layer>

[Manufacture Example 1-1] (Primer composition S1)

87 Parts of a polyurethane resin P2 solution, 5 parts of EA, 5 parts of IPA and 3 parts of silica particles (P-73 manufactured by Mizusawa Industrial Chemicals, Ltd.: hydrophilic silica particles having an average particle diameter of 3.8 μm) were stirred and mixed using a disperser, thereby obtaining a primer composition S1.

[Manufacture Examples 1-2 to 11 to Comparative Manufacture Example 1-1] (Primer compositions S2 to S11 and SS1)

Primer compositions S2 to S11 and SS1 were obtained by the same method as in Manufacture Example 1-1 except that raw materials and formulation proportions shown in Table 2 were used.

[Table 2]

| Table 2 | | Urethane resin | | | | | Acrylic resin | Polyester | Styrene maleate resin | Maleated rosin | Maleic acid | Curing agent | | Solvent | | | Pigment | Total |
|---|---|---|---|---|---|---|---|---|---|---|---|---|---|---|---|---|---|---|
| | | P1 | P2 | P3 | P4 | P5 | P6 | P7 | | | | A | B | EA | IPA | Water | Silica | |
| Acid value | | 0 | 39 | 61 | 39 | 39 | 180 | 22 | 285 | 130 | 967 | | | | | | | |
| Manufacture Example 1-1 | S1 | | 87 | | | | | | | | | | | 5 | 5 | | 3 | 100 |
| Manufacture Example 1-2 | S2 | | | 87 | | | | | | | | | | 5 | 5 | | 3 | 100 |
| Manufacture Example 1-3 | S3 | | | | 87 | | | | | | | | | 5 | 5 | | 3 | 100 |
| Manufacture Example 1-4 | S4 | | | | | 87 | | | | | | | | | | 10 | 3 | 100 |
| Manufacture Example 1-5 | S5 | | | | | | 87 | | | | | | | 5 | 5 | | 3 | 100 |
| Manufacture Example 1-6 | S6 | | | | | | | 77 | | | 10 | | | 5 | 5 | | 3 | 100 |
| Manufacture Example 1-7 | S7 | | | | | | | | 87 | | | | | 5 | 5 | | 3 | 100 |
| Manufacture Example 1-8 | S8 | | | | | | | | | 87 | | | | 5 | 5 | | 3 | 100 |
| Manufacture Example 1-9 | S9 | 77 | | | | | | | | | 10 | | | 5 | 5 | | 3 | 100 |
| Manufacture Example 1-10 | S10 | | | 84 | | | | | | | | 3 | | 5 | 5 | | 3 | 100 |
| Manufacture Example 1-11 | S11 | | | 84 | | | | | | | | | 3 | 5 | 5 | | 3 | 100 |
| Comparative Manufacture Example 1-1 | SS1 | 87 | | | | | | | | | | | | 5 | 5 | | 3 | 100 |

Hereinafter, abbreviations in Table 2 will be described below.

- · Styrene maleate resin: SMA 3000 manufactured by Cray Valley (acid value: 285 mgKOH/g, solution diluted to a solid content concentration of 30% with ethyl acetate)
- · Maleated rosin: MALKYD No. 32 manufactured by Arakawa Chemical Industries, Ltd., solid content concentration: 30% and acid value: 130 mgKOH/g
- · Curing agent A: HDI2 functional prepolymer (DURANATE D101 manufactured by Asahi Kasei Corporation, solution diluted to a solid content concentration of 50% with ethyl acetate)
- · Curing agent B: HDI-TMP adduct (DURANATE P301-75E manufactured by Asahi Kasei Corporation, solution diluted to a solid content concentration of 50% with ethyl acetate)

<Manufacture of ink>

[Ink Manufacture Example 2-1] (Printing ink R1)

10 Parts of a yellow pigment P. Y. 83 (C. I. Pigment Yellow 83), 0.2 parts of SYNERGIST 2105 (BYK-SYNERGIST 2105 manufactured by BYK Japan KK), 0.5 parts of BYK-142 (DISPER BYK-142 manufactured by BYK Japan KK), 24.3 parts of the urethane resin solution P1, 5 parts by PVC (vinyl chloride-vinyl acetate copolymer resin (SOLBIN TAO manufactured by Nissin Chemical Industry Co., Ltd., solid content: 30 %, EA solution)), 10 parts of EA and 10 parts of IPA were mixed and stirred together, and a dispersion treatment was performed thereon for 20 minutes using a sand mill as a bead mill. After that, 20 parts of the P1 solution, 10 parts of EA and 10 parts of IPA were mixed and stirred together to obtain a printing ink R1.

[Ink Manufacture Examples 2-2 to 21 and Comparative Manufacture Example 2-1] (Printing inks R2 to R21 and RR1)

Printing inks R2 to R21 and RR1 were obtained by the same method as in Ink Manufacture Example 2-1 except that raw materials and formulation proportions shown in Table 3 were used.

[Table 3]

| Table 3 | | Colorant | | | | | | Dispersant | | | | Binder resin | | Solvent | | Total | Mass% of pigment derivative with respect to colorant |
|---|---|---|---|---|---|---|---|---|---|---|---|---|---|---|---|---|---|
| | | Yellow | | Red | Blue | Black | White | Pigment derivative | | Resin-type dispersant | | | | | | | |
| | | P.Y. 83 | P.Y. 14 | P. R. 146 | P. B. 15 | CB | Titanium oxide | SYNERGIST 2105 | SYNERGIST 2100 | BYK 142 | BYK 2050 | Urethane resin P1 | PVC | EA | IPA | | |
| Manufacture Example 2-1 | R1 | 10 | | | | | | 0.2 | | 0.5 | | 44.3 | 5 | 20 | 20 | 100 | 2.0% |
| Manufacture Example 2-2 | R2 | | 10 | | | | | 0.2 | | 0.5 | | 44.3 | 5 | 20 | 20 | 100 | 2.0% |
| Manufacture Example 2-3 | R3 | | | 10 | | | | 0.2 | | 0.5 | | 44.3 | 5 | 20 | 20 | 100 | 2.0% |
| Manufacture Example 2-4 | R4 | | | | 10 | | | | 0.2 | 0.5 | | 44.3 | 5 | 20 | 20 | 100 | 2.0% |
| Manufacture Example 2-5 | R5 | | | | | 10 | | | 0.2 | 0.5 | | 44.3 | 5 | 20 | 20 | 100 | 2.0% |
| Manufacture Example 2-6 | R6 | | | | | | 30 | 0.1 | | 0.5 | | 34.4 | 5 | 15 | 15 | 100 | 0.3% |

(continued)

| Table 3 | | Colorant | | | | | | Dispersant | | | | Binder resin | | Solvent | | Total | Mass% of pigment derivative with respect to colorant |
|---|---|---|---|---|---|---|---|---|---|---|---|---|---|---|---|---|---|
| | | Yellow | | Red | Blue | Black | White | Pigment derivative | | Resin-type dispersant | | | | | | | |
| | | P. Y. 83 | P. Y. 14 | P. R. 146 | P. B. 15 | CB | Titanium oxide | SYNERGIST 2105 | SYNERGIST 2100 | BYK 142 | BYK 2050 | Urethane resin P1 | PVC | EA | IPA | | |
| Manufacture Example 2-7 | R7 | | 10 | | | | | 0.01 | | 0.5 | | 44.49 | 5 | 20 | 20 | 100 | 0.1% |
| Manufacture Example 2-8 | R8 | | 10 | | | | | 0.6 | | 0.5 | | 43.9 | 5 | 20 | 20 | 100 | 6.0% |
| Manufacture Example 2-9 | R9 | | 10 | | | | | 1 | | 0.5 | | 43.5 | 5 | 20 | 20 | 100 | 10.0% |
| Manufacture Example 2-10 | R10 | | | | 10 | | | | 0.01 | 0.5 | | 44.49 | 5 | 20 | 20 | 100 | 0.1% |
| Manufacture Example 2-11 | R11 | | | | 10 | | | | 0.6 | 0.5 | | 43.9 | 5 | 20 | 20 | 100 | 6.0% |
| Manufacture Example 2-12 | R12 | | | | 10 | | | | 1 | 0.5 | | 43.5 | 5 | 20 | 20 | 100 | 10.0% |

(continued)

| Table 3 | | Colorant | | | | | | Dispersant | | | | Binder resin | | Solvent | | Total | Mass% of pigment derivative with respect to colorant |
|---|---|---|---|---|---|---|---|---|---|---|---|---|---|---|---|---|---|
| | | Yellow | | Red | Blue | Black | White | Pigment derivative | | Resin-type dispersant | | | | | | | |
| | | P.Y. 83 | P.Y. 14 | P.R. 146 | P.B. 15 | CB | Titanium oxide | SYNERGIST 2105 | SYNERGIST 2100 | BYK 142 | BYK 2050 | Urethane resin P1 | PVC | EA | IPA | | |
| Manufacture Example 2-13 | R13 | | | | 10 | | | | | | 0.5 | 44.5 | 5 | 20 | 20 | 100 | 0.0% |
| Manufacture Example 2-14 | R14 | | | | 10 | | | | 0.2 | | | 44.8 | 5 | 20 | 20 | 100 | 2.0% |
| Manufacture Example 2-15 | R15 | | | | 10 | | | | 0.2 | | 0.5 | 44.3 | 5 | 20 | 20 | 100 | 2.0% |
| Manufacture Example 2-16 | R16 | | | | 10 | | | | 0.01 | | | 44.99 | 5 | 20 | 20 | 100 | 0.1% |
| Manufacture Example 2-17 | R17 | | | | 10 | | | | 1 | | | 44 | 5 | 20 | 20 | 100 | 10.0% |

(continued)

| Table 3 | | Colorant | | | | | | Dispersant | | | | Binder resin | | Solvent | | Total | Mass% of pigment derivative with respect to colorant |
|---|---|---|---|---|---|---|---|---|---|---|---|---|---|---|---|---|---|
| | | Yellow | | Red | Blue | Black | White | Pigment derivative | | Resin-type dispersant | | | | | | | |
| | | P.Y. 83 | P.Y. 14 | P. R. 146 | P. B. 15 | CB | Titanium oxide | SYNERGIST 2105 | SYNERGIST 2100 | BYK 142 | BYK 2050 | Urethane resin P1 | PVC | EA | IPA | | |
| Manufacture Example 2-18 | R18 | | | | 10 | | | | 0.2 | 0.01 | | 44.79 | 5 | 20 | 20 | 100 | 2.0% |
| Manufacture Example 2-19 | R19 | | | | 10 | | | | 0.2 | 3 | | 41.8 | 5 | 20 | 20 | 100 | 2.0% |
| Manufacture Example 2-20 | R20 | | | | 10 | | | | | 0.01 | | 44.99 | 5 | 20 | 20 | 100 | 0.0% |
| Manufacture Example 2-21 | R21 | | | | 10 | | | | | 3 | | 42 | 5 | 20 | 20 | 100 | 0.0% |
| Comparative Manufacture Example 2-1 | RR1 | | | | 10 | | | | | | | 45 | 5 | 20 | 20 | 100 | 0.0% |

Hereinafter, abbreviations in Table 3 will be described below.

- · P. Y. 14: C. I. Pigment Yellow 14
- · P. R. 146: C. I. Pigment Red 146
- · P. B. 15: C. I. Pigment Blue 15
- · CB: Carbon black
- · SYNERGIST 2100: BYK-SYNERGIST 2100 manufactured by BYK Japan KK
- · BYK 142: DISPER BYK-142 manufactured by BYK Japan KK (solid content concentration: 60%, amine value: 43 mgKOH/g, acid value: 46 mgKOH/g)
- · BYK 2050: DISPER BYK-2050 manufactured by BYK Japan KK (solid content concentration: 52%, amine value: 30 mgKOH/g

[Ink Manufacture Example 3-1] (Printing ink T1)

10 Parts of P. Y 83, 0.2 parts of SYNERGIST 2105, 0.5 parts of BYK-142, 24.3 parts of the urethane resin solution P2, 5 parts by PVC, 10 parts of EA and 10 parts of IPA were mixed and stirred together, and a dispersion treatment was performed thereon for 20 minutes using a sand mill as a bead mill. After that, 20 parts of the P2 solution, 10 parts of EA and 10 parts of IPA were mixed and stirred together to obtain a printing ink T1.

[Ink Manufacture Examples 3-2 to 24 and Comparative Manufacture Example 3-1] (Printing inks T2 to T24 and TT1)

Printing inks T2 to T24 and TT1 were obtained by the same method as in Ink Manufacture Example 3-1 except that raw materials and formulation proportions shown in Table 4 were used.

[Table 4]

| Table 4 | | Colorant | | | | | | Dispersant | | | | Binder resin | | | | | Solvent | | Tot al | Mass% of pigment derivativ e with respect to colorant |
|---|---|---|---|---|---|---|---|---|---|---|---|---|---|---|---|---|---|---|---|---|
| | | Yellow | | Red | Blue | Bla ck | Whit e | Pigment derivative | | Resin-type dispersant | | Ureth ane resin P2 | Ureth ane resin P6 | Styre ne male ate resin | Male ated rosin | P V C | E A | IP A | | |
| | | P. Y. 83 | P. Y. 14 | P. R. 146 | P. B. 15 | CB | Titani um oxide | SYNE RGIST 2105 | SYNER GIST 2100 | BY K 142 | BY K 205 0 | | | | | | | | | |
| Manufac ture Example 3-1 | T 1 | 10 | | | | | | 0.2 | | 0.5 | | 44.3 | | | | 5 | 2 0 | 20 | 10 0 | 2.0% |
| Manufac ture Example 3-2 | T 2 | | 10 | | | | | 0.2 | | 0.5 | | 44.3 | | | | 5 | 2 0 | 20 | 10 0 | 2.0% |
| Manufac ture Example 3-3 | T 3 | | | 10 | | | | 0.2 | | 0.5 | | 44.3 | | | | 5 | 2 0 | 20 | 10 0 | 2.0% |
| Manufac ture Example 3-4 | T 4 | | | | 10 | | | | 0.2 | 0.5 | | 44.3 | | | | 5 | 2 0 | 20 | 10 0 | 2.0% |
| Manufac ture Example 3-5 | T 5 | | | | | 10 | | | 0.2 | 0.5 | | 44.3 | | | | 5 | 2 0 | 20 | 10 0 | 2.0% |
| Manufac ture Example 3-6 | T 6 | | | | | | 30 | 0.1 | | 0.5 | | 34.4 | | | | 5 | 1 5 | 15 | 10 0 | 0.3% |
| Manufac ture Example 3-7 | T 7 | | 10 | | | | | 0.01 | | 0.5 | | 44.49 | | | | 5 | 2 0 | 20 | 10 0 | 0.1% |

(continued)

| Table 4 | | Colorant | | | | | | Dispersant | | | | Binder resin | | | | | Solvent | | Tot al | Mass% of pigment derivativ e with respect to colorant |
|---|---|---|---|---|---|---|---|---|---|---|---|---|---|---|---|---|---|---|---|---|
| | | Yellow | | Red | Blue | Bla ck | Whit e | Pigment derivative | | Resin-type dispersant | | Ureth ane resin P2 | Ureth ane resin P6 | Styre ne male ate resin | Male ated rosin | P V C | E A | IP A | | |
| | | P. Y. 83 | P. Y. 14 | P. R. 146 | P. B. 15 | CB | Titani um oxide | SYNE RGIST 2105 | SYNER GIST 2100 | BY K 142 | BY K 205 0 | | | | | | | | | |
| Manufac ture Example 3-8 | T 8 | | 10 | | | | | 0.6 | | 0.5 | | 43.9 | | | | 5 | 2 0 | 20 | 10 0 | 6.0% |
| Manufac ture Example 3-9 | T 9 | | 10 | | | | | 1 | | 0.5 | | 43.5 | | | | 5 | 2 0 | 20 | 10 0 | 10.0% |
| Manufac ture Example 3-10 | T 10 | | | | 10 | | | | 0.01 | 0.5 | | 44.49 | | | | 5 | 2 0 | 20 | 10 0 | 0.1% |
| Manufac ture Example 3-11 | T 11 | | | | 10 | | | | 0.6 | 0.5 | | 43.9 | | | | 5 | 2 0 | 20 | 10 0 | 6.0% |
| Manufac ture Example 3-12 | T 12 | | | | 10 | | | | 1 | 0.5 | | 43.5 | | | | 5 | 2 0 | 20 | 10 0 | 10.0% |
| Manufac ture Example 3-13 | T 13 | | | | 10 | | | | | 0.5 | | 44.5 | | | | 5 | 2 0 | 20 | 10 0 | 0.0% |

(continued)

| Table 4 | | Colorant | | | | | | Dispersant | | | | Binder resin | | | | | Solvent | | Tot al | Mass% of pigment derivativ e with respect to colorant |
|---|---|---|---|---|---|---|---|---|---|---|---|---|---|---|---|---|---|---|---|---|
| | | Yellow | | Red | Blue | Bla ck | Whit e | Pigment derivative | | Resin-type dispersant | | Ureth ane resin P2 | Ureth ane resin P6 | Styre ne male ate resin | Male ated rosin | P V C | E A | IP A | | |
| | | P. Y. 83 | P. Y. 14 | P. R. 146 | P. B. 15 | CB | Titani um oxide | SYNE RGIST 2105 | SYNER GIST 2100 | BY K 142 | BY K 205 0 | | | | | | | | | |
| Manufac ture Example 3-14 | T 14 | | | | 10 | | | | 0.2 | | | 44.8 | | | | 5 | 2 0 | 20 | 10 0 | 2.0% |
| Manufac ture Example 3-15 | T 15 | | | | 10 | | | | 0.2 | | 0.5 | 44.3 | | | | 5 | 2 0 | 20 | 10 0 | 2.0% |
| Manufac ture Example 3-16 | T 16 | | | | 10 | | | | 0.2 | | | | 49.8 | | | | 2 0 | 20 | 10 0 | 2.0% |
| Manufac ture Example 3-17 | T 17 | | | | 10 | | | | 0.2 | | | | | 49.8 | | | 2 0 | 20 | 10 0 | 2.0% |
| Manufac ture Example 3-18 | T 18 | | | | 10 | | | | 0.2 | | | | | | 49.8 | | 2 0 | 20 | 10 0 | 2.0% |
| Manufac ture Example 3-19 | T 19 | | | | 10 | | | | 0.01 | | | 44.99 | | | | 5 | 2 0 | 20 | 10 0 | 0.1% |

(continued)

| Table 4 | | Colorant | | | | | | Dispersant | | | | Binder resin | | | | | Solvent | | Total | Mass% of pigment derivative with respect to colorant |
|---|---|---|---|---|---|---|---|---|---|---|---|---|---|---|---|---|---|---|---|---|
| | | Yellow | | Red | Blue | Black | White | Pigment derivative | | Resin-type dispersant | | Urethane resin P2 | Urethane resin P6 | Styrene maleate resin | Maleated rosin | PVC | EA | IPA | | |
| | | P. Y. 83 | P. Y. 14 | P. R. 146 | P. B. 15 | CB | Titanium oxide | SYNERGIST 2105 | SYNERGIST 2100 | BYK 142 | BYK 2050 | | | | | | | | | |
| Manufacture Example 2-20 | T 20 | | | | 10 | | | | 1 | | | 44 | | | | 5 | 20 | 20 | 100 | 10.0% |
| Manufacture Example 2-21 | T 21 | | | | 10 | | | | 0.2 | 0.01 | | 44.79 | | | | 5 | 20 | 20 | 100 | 2.0% |
| Manufacture Example 2-22 | T 22 | | | | 10 | | | | 0.2 | 3 | | 41.8 | | | | 5 | 20 | 20 | 100 | 2.0% |
| Manufacture Example 2-23 | T 23 | | | | 10 | | | | | 0.01 | | 44.99 | | | | 5 | 20 | 20 | 100 | 0.0% |
| Manufacture Example 2-24 | T 24 | | | | 10 | | | | | 3 | | 42 | | | | 5 | 20 | 20 | 100 | 0.0% |
| Comparative Manufacture Example 3-1 | TT 1 | | | | 10 | | | | | | | 45 | | | | 5 | 20 | 20 | 100 | 0.0% |

<Dispersibility of ink>

The viscosities of the obtained inks R1 to R21, RR1, T1 to T24 and TT1 were measured, and the dispersibility of the inks was evaluated. The viscosities were measured at 25°C using a Zahn cup #4 (manufactured by RIGO Co., Ltd. and evaluated by the following standards. The results are collectively shown in Tables 5-1 to 4.

A (Excellent): 10 seconds or longer and shorter than 20 seconds
B (Favorable): 20 seconds or longer and shorter than 25 seconds
C (Available): 25 seconds or longer and shorter than 30 seconds
D (Unavailable): Other than A to C

<Manufacture of packaging materials>

[Example 1] (Packaging material L1)

The primer composition S1 and the printing ink R4 were each diluted using a solvent mixture of EA/IPA (mass ratio: 70/30) so that the viscosity became 15 seconds (25°C, Zahn cup #3 (manufactured by RIGO Co., Ltd.)).

The diluted primer composition S1 and printing ink R4 were printed in the stated order on OPP (corona-treated stretched polypropylene film, film thickness: 20 μm) using a gravure printing machine including a gravure cylinder having a cell depth of 30 μm and dried at 50°C, thereby obtaining a packaging material L1 having a configuration of the first base material layer (OPP)/the primer layer (S1)/the printing layer (R4).

[Examples 2 to 33 and Comparative Examples 1 and 2] (Packaging materials L2 to L33, LL1 and LL2)

Packaging materials L2 to L33, LL1 and LL2 were obtained by the same method as for the packaging material L1 except that materials shown in Table 5-1 were used. In the packaging material L33, the diluted primer composition S1 and printing ink R4 were printed on PE (liner low-density polyethylene film, film thickness: 50 μm).

[Table 5-1]

| Table 5-1 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 1 | L1 | OPP | S1 | R4 | - | - | - | - | A | A | A | A |
| Example 2 | L2 | OPP | S2 | R4 | - | - | - | - | A | A | A | A |
| Example 3 | L3 | OPP | S3 | R4 | - | - | - | - | A | A | A | A |
| Example 4 | L4 | OPP | S4 | R4 | - | - | - | - | A | A | A | A |
| Example 5 | L5 | OPP | S5 | R4 | - | - | - | - | A | A | A | A |
| Example 6 | L6 | OPP | S6 | R4 | - | - | - | - | A | A | A | A |
| Example 7 | L7 | OPP | S7 | R4 | - | - | - | - | A | A | A | A |
| Example 8 | L8 | OPP | S8 | R4 | - | - | - | - | A | A | A | A |
| Example 9 | L9 | OPP | S9 | R4 | - | - | - | - | A | A | A | A |
| Example 10 | L10 | OPP | S10 | R4 | - | - | - | - | A | B | A | A |
| Example 11 | L11 | OPP | S11 | R4 | - | - | - | - | A | B | A | A |
| Example 12 | L12 | OPP | S1 | R1 | - | - | - | - | A | A | A | A |
| Example 13 | L13 | OPP | S1 | R2 | - | - | - | - | A | A | A | A |
| Example 14 | L14 | OPP | S1 | R3 | - | - | - | - | A | A | A | A |
| Example 15 | L15 | OPP | S1 | R5 | - | - | - | - | A | A | A | A |
| Example 16 | L16 | OPP | S1 | R6 | - | - | - | - | A | A | A | A |
| Example 17 | L17 | OPP | S1 | R7 | - | - | - | - | C | B | A | A |
| Example 18 | L18 | OPP | S1 | R8 | - | - | - | - | A | A | B | B |
| Example 19 | L19 | OPP | S1 | R9 | - | - | - | - | A | A | C | C |
| Example 20 | L20 | OPP | S1 | R10 | - | - | - | - | C | B | A | A |
| Example 21 | L21 | OPP | S1 | R11 | - | - | - | - | A | A | B | B |
| Example 22 | L22 | OPP | S1 | R12 | - | - | - | - | A | A | C | C |
| Example 23 | L23 | OPP | S1 | R13 | - | - | - | - | C | B | A | A |

(continued)

| Table 5-1 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 24 | L24 | OPP | S1 | R14 | - | - | - | - | B | B | A | A |
| Example 25 | L25 | OPP | S1 | R15 | - | - | - | - | A | A | A | A |
| Example 26 | L26 | OPP | S1 | R16 | - | - | - | - | C | B | A | A |
| Example 27 | L27 | OPP | S1 | R17 | - | - | - | - | A | A | C | C |
| Example 28 | L28 | OPP | S1 | R18 | - | - | - | - | B | B | A | A |
| Example 29 | L29 | OPP | S1 | R19 | - | - | - | - | A | A | A | A |
| Example 30 | L30 | OPP | S1 | R20 | - | - | - | - | C | B | A | A |
| Example 31 | L31 | OPP | S1 | R21 | - | - | - | - | A | A | A | A |
| Example 32 | L32 | OPP | S1 | T4 | - | - | - | - | A | A | A | A |
| Example 33 | L33 | PE | S1 | R4 | - | - | - | - | A | A | A | A |
| Comparative Example 1 | LL1 | OPP | SS1 | R4 | - | - | - | - | A | D | D | D |
| Comparative Example 2 | LL2 | OPP | S1 | RR1 | - | - | - | - | D | B | A | A |

[Example 34] (Packaging material L34)

The printing ink T1 was diluted using a solvent mixture of EA/IPA (mass ratio: 70/30) so that the viscosity became 15 seconds (25°C, Zahn cup #3 (manufactured by RIGO Co., Ltd.)).

The diluted printing ink T1 was printed on OPP using a gravure printing machine including a gravure cylinder having a cell depth of 30 μm and dried at 50°C, thereby obtaining a packaging material L34 having a configuration of the first base material layer (OPP)/the printing layer (T1).

[Examples 35 to 58 and Comparative Examples 3 and 4] (Packaging materials L35 to L58, LL3 and LL4)

Packaging materials L35 to L58, LL3 and LL4 were obtained by the same method as for the packaging material L34 except that materials shown in Table 5-2 were used.

[Table 5-2]

| Table 5-2 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 34 | L34 | OPP | - | T1 | - | - | - | - | A | A | A | A |
| Example 35 | L35 | OPP | - | T2 | - | - | - | - | A | A | A | A |
| Example 36 | L36 | OPP | - | T3 | - | - | - | - | A | A | A | A |
| Example 37 | L37 | OPP | - | T4 | - | - | - | - | A | A | A | A |
| Example 38 | L38 | OPP | - | T5 | - | - | - | - | A | A | A | A |
| Example 39 | L39 | OPP | - | T6 | - | - | - | - | A | A | A | A |
| Example 40 | L40 | OPP | - | T7 | - | - | - | - | C | B | A | A |
| Example 41 | L41 | OPP | - | T8 | - | - | - | - | A | A | B | B |
| Example 42 | L42 | OPP | - | T9 | - | - | - | - | A | A | C | C |
| Example 43 | L43 | OPP | - | T10 | - | - | - | - | C | B | A | A |
| Example 44 | L44 | OPP | - | T11 | - | - | - | - | A | A | B | B |
| Example 45 | L45 | OPP | - | T12 | - | - | - | - | A | A | C | C |
| Example 46 | L46 | OPP | - | T13 | - | - | - | - | C | B | A | A |
| Example 47 | L47 | OPP | - | T14 | - | - | - | - | B | B | A | A |
| Example 48 | L48 | OPP | - | T15 | - | - | - | - | A | A | A | A |
| Example 49 | L49 | OPP | - | T16 | - | - | - | - | A | A | A | A |
| Example 50 | L50 | OPP | - | T17 | - | - | - | - | A | A | A | A |
| Example 51 | L51 | OPP | - | T18 | - | - | - | - | A | A | A | A |
| Example 52 | L52 | OPP | - | T19 | - | - | - | - | C | B | A | A |
| Example 53 | L53 | OPP | - | T20 | - | - | - | - | A | A | C | C |
| Example 54 | L54 | OPP | - | T21 | - | - | - | - | B | B | A | A |
| Example 55 | L55 | OPP | - | T22 | - | - | - | - | A | A | A | A |
| Example 56 | L56 | OPP | - | T23 | - | - | - | - | C | B | A | A |

(continued)

| Table 5-2 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 57 | L57 | OPP | - | T24 | - | - | - | - | A | A | A | A |
| Example 58 | L58 | PE | - | T4 | - | - | - | - | A | A | A | A |
| Comparative Example 3 | LL3 | OPP | - | R13 | - | - | - | - | A | D | D | D |
| Comparative Example 4 | LL4 | OPP | - | TT1 | - | - | - | - | D | B | A | A |

[Example 59] (Packaging material L59)

The primer composition S1 and the printing ink R4 were each diluted using a solvent mixture of EA/IPA (mass ratio: 70/30) so that the viscosity became 15 seconds (25°C, Zahn cup #3 (manufactured by RIGO Co., Ltd.)).
The primer composition S1 and the printing ink R4 were printed in the stated order on OPP using a gravure printing machine including a gravure cylinder having a cell depth of 30 μm and dried at 50°C, thereby obtaining a laminate having a configuration of the first base material layer (OPP)/the primer layer (S 1)/the printing layer (R4).
Next, the adhesive A (polyester-based urethane adhesive "TM250HV/CAT-RT86L-60" manufactured by Toyo-Morton, Ltd.) was applied onto and dried on the printing layer of the obtained laminate using a dry laminating machine so that the amount of the adhesive applied and dried became 2 g/$m^2$, and then pasted to CPP (unstretched polypropylene, film thickness 30 μm), thereby obtaining a packaging material L59 having a configuration of a first base material layer (OPP)/the primer layer (S1)/the printing layer (R4)/the adhesive layer/a second base material layer (CPP).

[Examples 60 to 90 and Comparative Examples 5 and 6] (Packaging materials L60 to L90, LL5 and LL6)

Packaging materials L60 to L90, LL5 and LL6 were obtained by the same method as for the packaging material L59 except that materials shown in Table 5-3 were used.

[Example 91] (Packaging material L91)

The primer composition S1 and the printing ink R4 were each diluted using a solvent mixture of EA/IPA (mass ratio: 70/30) so that the viscosity became 15 seconds (25°C, Zahn cup #3 (manufactured by RIGO Co., Ltd.)).
The primer composition S1 and the printing ink R4 were printed in the stated order on OPP using a gravure printing machine including a gravure cylinder having a cell depth of 30 μm and dried at 50°C, thereby obtaining a laminate having a configuration of the first base material layer (OPP)/the primer layer (S 1)/the printing layer (R4).
Next, the adhesive A was applied onto and dried on the printing layer of the obtained laminate using a dry laminating machine so that the amount of the adhesive applied and dried became 2 g/$m^2$, and then pasted to VMPET (polyethylene terephthalate film having a deposited layer on which aluminum was deposited in an amorphous form, film thickness 12 μm). Furthermore, the adhesive A was applied onto and dried on VMPET using the dry laminating machine so that the amount of the adhesive applied and dried became 2 g/$m^2$, and then pasted to CPP, thereby obtaining a packaging material L91 having a configuration of a first base material layer (OPP)/the primer layer (S1)/the printing layer (R4)/the adhesive layer/a second base material layer (VMCPP)/the adhesive layer/a third base material layer (CPP).

[Table 5-3]

| Table 5-3 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 59 | L59 | OPP | S1 | R4 | A | CPP | - | - | A | A | A | A |
| Example 60 | L60 | OPP | S2 | R4 | A | CPP | - | - | A | A | A | A |
| Example 61 | L61 | OPP | S3 | R4 | A | CPP | - | - | A | A | A | A |
| Example 62 | L62 | OPP | S4 | R4 | A | CPP | - | - | A | A | A | A |
| Example 63 | L63 | OPP | S5 | R4 | A | CPP | - | - | A | A | A | A |
| Example 64 | L64 | OPP | S6 | R4 | A | CPP | - | - | A | A | A | A |
| Example 65 | L65 | OPP | S7 | R4 | A | CPP | - | - | A | A | A | A |
| Example 66 | L66 | OPP | S8 | R4 | A | CPP | - | - | A | A | A | A |
| Example 67 | L67 | OPP | S9 | R4 | A | CPP | - | - | A | A | A | A |
| Example 68 | L68 | OPP | S10 | R4 | A | CPP | - | - | A | B | A | A |
| Example 69 | L69 | OPP | S11 | R4 | A | CPP | - | - | A | B | A | A |
| Example 70 | L70 | OPP | S1 | R1 | A | CPP | - | - | A | A | A | A |
| Example 71 | L71 | OPP | S1 | R2 | A | CPP | - | - | A | A | A | A |
| Example 72 | L72 | OPP | S1 | R3 | A | CPP | - | - | A | A | A | A |
| Example 73 | L73 | OPP | S1 | R5 | A | CPP | - | - | A | A | A | A |
| Example 74 | L74 | OPP | S1 | R6 | A | CPP | - | - | A | A | A | A |
| Example 75 | L75 | OPP | S1 | R7 | A | CPP | - | - | C | C | A | A |
| Example 76 | L76 | OPP | S1 | R8 | A | CPP | - | - | A | A | B | B |
| Example 77 | L77 | OPP | S1 | R9 | A | CPP | - | - | A | A | C | C |
| Example 78 | L78 | OPP | S1 | R10 | A | CPP | - | - | C | C | A | A |
| Example 79 | L79 | OPP | S1 | R11 | A | CPP | - | - | A | A | B | B |
| Example 80 | L80 | OPP | S1 | R12 | A | CPP | - | - | A | A | C | C |
| Example 81 | L81 | OPP | S1 | R13 | A | CPP | - | - | C | C | A | A |

(continued)

| Table 5-3 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 82 | L82 | OPP | S1 | R14 | A | CPP | - | - | B | C | A | A |
| Example 83 | L83 | OPP | S1 | R15 | A | CPP | - | - | A | A | A | A |
| Example 84 | L84 | OPP | S1 | R16 | A | CPP | - | - | C | C | A | A |
| Example 85 | L85 | OPP | S1 | R17 | A | CPP | - | - | A | A | C | C |
| Example 86 | L86 | OPP | S1 | R18 | A | CPP | - | - | B | C | A | A |
| Example 87 | L87 | OPP | S1 | R19 | A | CPP | - | - | A | A | A | A |
| Example 88 | L88 | OPP | S1 | R20 | A | CPP | - | - | C | C | A | A |
| Example 89 | L89 | OPP | S1 | R21 | A | CPP | - | - | A | B | A | A |
| Example 90 | L90 | OPP | S1 | T4 | A | CPP | - | - | A | B | A | A |
| Example 91 | L91 | OPP | S1 | R4 | A | VMPET | A | CPP | A | A | A | A |
| Comparative Example 5 | LL5 | OPP | SS1 | R4 | A | CPP | - | - | A | D | D | D |
| Comparative Example 6 | LL6 | OPP | S1 | RR1 | A | CPP | - | - | D | C | A | A |

[Example 92] (Packaging material L92)

The printing ink T1 was diluted using a solvent mixture of EA/IPA (mass ratio: 70/30) so that the viscosity became 15 seconds (25°C, Zahn cup #3 (manufactured by RIGO Co., Ltd.)).
The diluted printing ink T1 was printed on OPP using a gravure printing machine including a gravure cylinder having a cell depth of 30 μm and dried at 50°C, thereby obtaining a laminate having a configuration of the first base material layer (OPP)/the printing layer (T1).
Next, the adhesive A was applied onto and dried on the printing layer of the obtained laminate using a dry laminating machine so that the amount of the adhesive applied and dried became 2 g/$m^2$, and then pasted to CPP, thereby obtaining a packaging material L92 having a configuration of a first base material layer (OPP)/the printing layer (T1)/the adhesive layer/a second base material layer (CPP).

[Examples 93 to 115 and Comparative Examples 7 and 8] (Packaging materials L93 to L115, LL7 and LL8)

Packaging materials L93 to L115, LL7 and LL8 were obtained by the same method as for the packaging material L92 except that materials shown in Table 5-4 were used.

[Example 116] (Packaging material L116)

The printing ink T4 was diluted using a solvent mixture of EA/IPA (mass ratio: 70/30) so that the viscosity became 15 seconds (25°C, Zahn cup #3 (manufactured by RIGO Co., Ltd.)).
The diluted printing ink T4 was printed on OPP using a gravure printing machine including a gravure cylinder having a cell depth of 30 μm and dried at 50°C, thereby obtaining a laminate having a configuration of the first base material layer (OPP)/the printing layer (T4).
Next, the adhesive A was applied onto and dried on the printing layer of the obtained laminate using a dry laminating machine so that the amount of the adhesive applied and dried became 2 g/$m^2$, and then pasted to VMPET. Furthermore, the adhesive A was applied onto and dried on VMPET using the dry laminating machine so that the amount of the adhesive applied and dried became 2 g/$m^2$, and then pasted to CPP, thereby obtaining a packaging material L116 having a configuration of a first base material layer (OPP)/the printing layer (T4)/the adhesive layer/a second base material layer (VMCPP)/the adhesive layer/a third base material layer (CPP).

[Table 5-4]

| Table 5-4 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 92 | L92 | OPP | - | T1 | A | CPP | - | - | A | B | A | A |
| Example 93 | L93 | OPP | - | T2 | A | CPP | - | - | A | B | A | A |
| Example 94 | L94 | OPP | - | T3 | A | CPP | - | - | A | B | A | A |
| Example 95 | L95 | OPP | - | T4 | A | CPP | - | - | A | B | A | A |
| Example 96 | L96 | OPP | - | T5 | A | CPP | - | - | A | B | A | A |
| Example 97 | L97 | OPP | - | T6 | A | CPP | - | - | A | B | A | A |
| Example 98 | L98 | OPP | - | T7 | A | CPP | - | - | C | C | A | A |
| Example 99 | L99 | OPP | - | T8 | A | CPP | - | - | A | B | B | B |
| Example 100 | L100 | OPP | - | T9 | A | CPP | - | - | A | B | C | C |
| Example 101 | L101 | OPP | - | T10 | A | CPP | - | - | C | C | A | A |
| Example 102 | L102 | OPP | - | T11 | A | CPP | - | - | A | B | B | B |
| Example 103 | L103 | OPP | - | T12 | A | CPP | - | - | A | B | C | C |
| Example 104 | L104 | OPP | - | T13 | A | CPP | - | - | C | C | A | A |
| Example 105 | L105 | OPP | - | T14 | A | CPP | - | - | B | C | A | A |
| Example 106 | L106 | OPP | - | T15 | A | CPP | - | - | A | B | A | A |
| Example 107 | L107 | OPP | - | T16 | A | CPP | - | - | A | B | A | A |
| Example 108 | L108 | OPP | - | T17 | A | CPP | - | - | A | B | A | A |
| Example 109 | L109 | OPP | - | T18 | A | CPP | - | - | A | B | A | A |
| Example 110 | L110 | OPP | - | T19 | A | CPP | - | - | C | C | A | A |
| Example 111 | L111 | OPP | - | T20 | A | CPP | - | - | A | A | C | C |
| Example 112 | L112 | OPP | - | T21 | A | CPP | - | - | B | C | A | A |
| Example 113 | L113 | OPP | - | T22 | A | CPP | - | - | A | A | A | A |
| Example 114 | L114 | OPP | - | T23 | A | CPP | - | - | C | C | A | A |

(continued)

| Table 5-4 | | Lamination configuration | | | | | | | Evaluation (A to D) | | | |
|---|---|---|---|---|---|---|---|---|---|---|---|---|
| | | Base material 1 | Primer | Ink | Adhesive | Base material 2 | Adhesive | Base material 3 | Ink dispersion stability | Separability | Coloration of separated base material 1 | Transmission of recycled film |
| Example 115 | L115 | OPP | - | T24 | A | CPP | - | - | A | B | A | A |
| Example 116 | L116 | OPP | - | T4 | A | VMPET | A | CPP | A | B | A | A |
| Comparative Example 7 | LL7 | OPP | - | R13 | A | CPP | - | - | C | D | D | D |
| Comparative Example 8 | LL8 | OPP | - | TT1 | A | CPP | - | - | D | C | A | A |

<Evaluation of packaging materials>

The obtained packaging materials were evaluated as described below. The results are shown in Tables 5-1 to 4.

<Separability>

Fifteen samples obtained by cutting each of the obtained packaging materials L1 to L116 and LL1 to LL8 to sizes of 3 cm × 3 cm were immersed in 50 g of a 2% sodium hydroxide aqueous solution and stirred at 70°C and 500 rpm. The separability of the printing layer from the first base material was visually observed and evaluated by the following standards.

A (Excellent): 80% or more of the printing layer peels off from the first base material within shorter than 15 minutes.
B (Favorable): 80% or more of the printing layer peels off from the first base material within 15 minutes or longer and shorter than 30 minutes.
C (Available): 80% or more of the printing layer peels off from the first base material within 30 minutes or longer and shorter than 60 minutes.
D (Unavailable): Other than A to C

<Coloration of peeled base material 1>

Fifteen samples (x) obtained by cutting each of the obtained packaging materials L1 to L116 and LL1 to LL8 to sizes of 3 cm × 3 cm were immersed in 50 g of a 2% sodium hydroxide aqueous solution and stirred at 70°C and 500 rpm for 2 hours. The peeled first base materials were recovered, washed with water and dried, and then the obtained 15 pieces of the base material were overlapped together, and the color value $L^*_x$, $a^*_x$, $b^*_x$ was measured with a haze meter (manufactured by Nippon Denshoku Industries Co., Ltd., SH7000). For the film (OPP or PE) used in the first base material as well, similarly, 15 samples (y) obtained by cutting the film to sizes of 3 cm × 3 cm were immersed in 50 g of a 2% sodium hydroxide aqueous solution, stirred at 70°C and 500 rpm for 2 hours, washed with water and dried, then, the obtained 15 pieces of the base material were overlapped together, and the color value $L^*_x$, $a^*_x$, $b^*_x$ was measured, and the color difference ΔE was obtained by the following calculation formula.

$$(\text{Formula})\ \Delta E = ((L^*_x - L^*_y)^2 + (a^*_x - a^*_y)^2 + (b^*_x - b^*_y)^2)^{1/2}$$

The coloration of the base material was evaluated by the following standards.

A (Excellent): ΔE is less than 3
B (Favorable): ΔE is 3 or more and less than 20
C (Available): ΔE is 20 or more and less than 50
D (Unavailable): Other than A to C

<Transmittance of recycled film>

A sample obtained by cutting out each of the obtained packaging materials L1 to L116 and LL1 to LL8 to sizes of 3 cm × 3 cm was immersed in a 2% sodium hydroxide aqueous solution and stirred at 70°C for 2 hours. The separated first base material was recovered, washed with water and dried, then, the recovered first base material was extruded with a single screw extruder at 200°C and subjected to a pelletizing step, thereby obtaining pellets of a recycled resin. The recycled resin was extruded with a T-die film molding machine at 200°C to fabricate a recycled film having a thickness of 30 μm. Regarding the coloration of the recycled film, the total light transmittance was measured using a haze meter (manufactured by Nippon Denshoku Industries Co., Ltd., SH7000) and evaluated by the following standards.

A (Excellent): The total light transmittance is 70% or higher
B (Favorable): The total light transmittance is 50% or higher and lower than 70%
C (Available): The total light transmittance is 30% or higher and lower than 50%
D (Unavailable): Other than A to C

The above-described evaluation results showed that, in a packaging material fabricated with the primer composition and printing ink of the present invention, ink or the like can be easily separated from the first base material in an alkali aqueous solution, a favorable recycled base material can be obtained, and, furthermore, a molding material

and a recycled film in which coloration is less likely can be obtained.

The disclosure of the present application is related to the subject of Japanese Patent Application No. 2021-142898, filed on September 2, 2021, all the contents of which is incorporated herein by reference.

## Claims

1. A packaging material provided with at least a first base material, a primer layer (S), and a printing layer (R) in the stated order, or a packaging material provided with at least a first base material and a printing layer (T) in the stated order,

   wherein the primer layer (S) and the printing layer (T) are each a layer that is for recycling the first base material by causing the first base material to be separated therefrom and that contains a compound having an acidic group, and
   the printing layer (R) and the printing layer (T) are each a layer that contains a colorant, a dispersant (A), and a binder resin.

2. A packaging material provided with at least a first base material, a primer layer (S), a printing layer (R), and a second base material in the stated order, or a packaging material provided with at least a first base material, a printing layer (T), and a second base material in the stated order,

   wherein the primer layer (S) and the printing layer (T) are each a layer that is for recycling the first base material by causing the first base material to be separated therefrom and that contains a compound having an acidic group, and
   the printing layer (R) and the printing layer (T) are each a layer that contains a colorant, a dispersant (A), and a binder resin.

3. The packaging material according to Claim 1 or 2,
   wherein the dispersant (A) is a pigment derivative and/or a resin-type dispersant.

4. The packaging material according to any one of Claims 1 to 3,
   wherein the dispersant (A) contains a pigment derivative and a resin-type dispersant.

5. The packaging material according to any one of Claims 1 to 4,
   wherein a content of the pigment derivative is 0.01 to 10 mass% of the entire colorant.

6. The packaging material according to any one of Claims 1 to 5,
   wherein the compound having an acidic group is a binder resin.

7. The packaging material according to any one of Claims 1 to 6,
   wherein the compound having an acidic group has an acid value of 15 to 300 mgKOH/g.

8. The packaging material according to any one of Claims 1 to 7,
   wherein the compound having an acidic group is a polyurethane resin.

9. The packaging material according to any one of Claims 1 to 8,
   wherein the primer layer (S) contains a polyurethane resin having an acid value of 15 to 70, and the printing layer (R) contains 0.01 to 5 mass% of a pigment derivative with respect to the entire colorant.

10. A recycled molding material comprising:
    a first base material obtained by bringing the packaging material according to any one of Claims 1 to 9 into contact with an alkali aqueous solution and separating the packaging material.

11. A method for manufacturing a recycled molding material including a first base material obtained by separating the packaging material according to any one of Claims 1 to 9, the method comprising the following steps 1 to 3:

    (Step 1) a step of crushing the packaging material according to any one of Claims 1 to 9 and bringing the packaging material into contact with an alkali aqueous solution to separate the first base material from the

packaging material,
(Step 2) a step of washing the first base material obtained in the step 1 with water, and
(Step 3) a step of heat-molding the first base material obtained in the step 2.

**INTERNATIONAL SEARCH REPORT**

International application No. **PCT/JP2022/032646**

**A. CLASSIFICATION OF SUBJECT MATTER**

***B32B 27/00***(2006.01)i; ***B65D 65/40***(2006.01)i; ***C09D 5/00***(2006.01)i; ***C09D 5/20***(2006.01)i; ***C09D 175/04***(2006.01)i
FI: B65D65/40 D; C09D5/20; C09D175/04; C09D5/00 D; B32B27/00 Z

According to International Patent Classification (IPC) or to both national classification and IPC

**B. FIELDS SEARCHED**

Minimum documentation searched (classification system followed by classification symbols)

B65D65/40; B32B1/00-43/00; C09D1/00-10/00; C09D101/00-201/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2021-88408 A (TOYO INK SC HOLDINGS CO LTD) 10 June 2021 (2021-06-10) claims, paragraphs [0023]-[0027], [0070]-[0093], examples | 1-11 |
| Y | JP 2021-91476 A (TOYO INK SC HOLDINGS CO LTD) 17 June 2021 (2021-06-17) claims, paragraphs [0019]-[0023], [0056], [0061]-[0075], examples | 1-11 |
| Y | JP 2011-63768 A (TOYO INK MFG CO LTD) 31 March 2011 (2011-03-31) claims, paragraphs [0003], [0007], [0075]-[0086], examples | 1-11 |
| A | JP 2021-107159 A (TOYO INK SC HOLDINGS CO LTD) 29 July 2021 (2021-07-29) | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 October 2022** | **01 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/032646**

| Patent document cited in search report | Publication date (day/month/year) | Patent family member(s) | Publication date (day/month/year) |
|---|---|---|---|
| JP 2021-88408 A | 10 June 2021 | (Family: none) | |
| JP 2021-91476 A | 17 June 2021 | (Family: none) | |
| JP 2011-63768 A | 31 March 2011 | (Family: none) | |
| JP 2021-107159 A | 29 July 2021 | JP 2021-98546 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001131484 A
- JP 11209677 A
- JP 2020090627 A
- JP 2021142898 A